(19) Europäisches Patentamt
European Patent Office
Office européen des brevets

(11) **EP 1 405 361 B1**

(12) **EUROPEAN PATENT SPECIFICATION**

(45) Date of publication and mention
of the grant of the patent:
**27.08.2014 Bulletin 2014/35**

(51) Int Cl.:
***H01M 8/12*** *(2006.01)*

(21) Application number: **02742616.2**

(22) Date of filing: **08.07.2002**

(86) International application number:
**PCT/CH2002/000366**

(87) International publication number:
**WO 2003/005475 (16.01.2003 Gazette 2003/03)**

(54) **LANTHANIDE CHROMITE-BASED SOFC ANODES**

FESTOXID-BRENNSTOFFZELLE (SOFC) ANODEN AUF BASIS VON LANTHANCHROMIT

ANODES DE SOFC A BASE DE CHROMITE DE LANTHANIDE

(84) Designated Contracting States:
**AT BE BG CH CY CZ DE DK EE ES FI FR GB GR IE IT LI LU MC NL PT SE SK TR**

(30) Priority: **06.07.2001 EP 01810672**

(43) Date of publication of application:
**07.04.2004 Bulletin 2004/15**

(73) Proprietor: **ECOLE POLYTECHNIQUE FEDERALE DE LAUSANNE (EPFL)**
**1015 Lausanne (CH)**

(72) Inventors:
• **SFEIR, Joseph**
**CH-6260 Reiden (CH)**
• **THAMPI, Ravindranathan, K.**
**CH-1024 Ecublens (CH)**

(74) Representative: **Ganguillet, Cyril et al**
**ABREMA**
**Agence Brevets & Marques Ganguillet**
**Avenue du Théâtre 16**
**P.O. Box 5027**
**1002 Lausanne (CH)**

(56) References cited:
**EP-A- 0 514 842 US-A- 3 929 670**
**US-A- 4 562 124**

**Description**

The present invention concerns the use of substituted lanthanide chromites as anode materials for operating a SOFC. The invention also concerns a SOFC.

Fuel Cells are able to directly convert chemical energy to electrical energy, without any Carnot limitations. Hence their energy efficiencies are relatively high. Among the various types of fuel cells, Solid Oxide Fuel Cells (SOFC) are operated at high temperatures and in principle, can run on various fuels such as natural gas (primarily methane), LPG, naphtha and hydrogen. Like any other electrochemical cell, it has an electrolyte, a cathode (air side) and an anode (fuel side). SOFCs use a solid oxygen ion conducting electrolyte (for example, yttria stabilised zirconia, YSZ). The fuel is oxidised on the anode side and to effect the oxidation process, the electrolyte transports the required $O^{2-}$ from the cathode side. SOFCs are able to generate both electricity and high quality heat, which may be used for space heating or combined power cycle applications. The most preferred fuel for SOFC operation is natural gas as the reaction free energy is high

$$CH_4 + 2O_2 = CO_2 + 2H_2O, \Delta_r G^{\circ}_{800^{\circ}C} = -800.8 kJ/mol \text{, deep oxidation} \quad (1)$$

and in the state of the art this is not fed in directly to the anode, because of problems associated with the anode deactivation and coking. Hence either pure hydrogen or an externally reformed natural gas feed is used. The external reformer not only decreases the overall system efficiency, as some of the free energy is wasted

$$CH_4 + H_2O = CO + 3H_2, \Delta_r G^{\circ}_{800^{\circ}C} = -45.2 kJ/mol \text{, steam reforming} \quad (2)$$

but also increases the system cost and causes heat management constraints. Therefore, a direct methane fed SOFC is a highly desirable technological breakthrough.

Conventional solid oxide fuel cells (SOFC) are operated with pure hydrogen or partially to fully reformed natural gas. SOFC anodes are generally made of electrocatalytically active Ni-YSZ cermets [1,2]. Pure methane feeding on this anode leads to the detachment ofNi particles from the YSZ support and their encapsulation by carbon [3] leading to coking and deactivation. From energetic, operational and design considerations, SOFCs running on direct natural gas feed would be more attractive systems. However, in this case, several parameters influence the anode performance and stability. The anodes should withstand reduction at $P_{O_2}$ as low as $10^{-24}$ atm, be compatible with the YSZ electrolyte, possess acceptable thermal expansion coefficient, conductivity and appropriate catalytic and electrocatalytic properties and inhibit carbon deposition. $CH_4$ oxidation has been studied over various perovskite oxides of the $ABO_3$ formula [4-8]. Among these, only $LaCrO_3$ was reported to be stable at 1000°C and very low $P_{O_2}$ of $10^{-21}$ atm [9].

In SOFC, lanthanum chromites were investigated for their potential use as interconnect materials for cell stacking. These materials are easily substituted on the A and B sites with alkali and transition metal elements respectively, which allows interesting modifications in their catalytic and electronic properties. In literature, many reports focus on the doping effect of alkali (Mg, Ca, Sr) as well as transition metal (Co, Ni) elements on the conductivity, sintering and stability behaviour of these materials [10-17], US 4,562,124 reports ceramics on the basis of modified lanthanum chromite, wherein a small amount of chromite is replaced by cerium and which are used in hydrogen or carbon monoxide fed electrochemical cell and not in a direct hydrocarbon fed SOFC. Less work is done on catalysis. Methane partial oxidation was attempted on substituted lanthanum chromites by different groups for their use as catalysts or as possible anodes in SOFC [18-23]. The testing conditions were however far from real SOFC conditions (partial oxidation instead of steam or $CO_2$ reforming) and only a couple of group reported a real SOFC test [24-26] with $La_{0.7}Ca_{0.3}CrO_3$ and $La_{0.8}Ca_{0.23}CrO_3$. Also, more recently, Primdahl et al. [27] reported impedance spectroscopy studies on $La_{0.8}Sr_{0.2}Cr_{0.97}V_{0.03}O_3$ in $H_2$ at open circuit potential (OCV). These experiments indicated little reforming and direct oxidation ability of the base LC materials. Alternatively, in catalytic runs, Metcalfe et al. [28] showed the dissociation of dry $CH_4$ which was inhibited by $H_2O$ addition.

Calcium and / or strontium substituted lanthanum chromites were explored as alternative anodes to Ni-YSZ [29]. These materials were observed to inhibit coking but their overall electrocatalytic activity was found to be low under pure methane feed. Also, a degradation was observed and was related to a progressive reduction of the electrode as well as a topotactic reaction between excess Ca or Sr with YSZ.

It is therefore an object of the invention to develop a SOFC running on hydrocarbons, capable to be directly fed with gaseous hydrocarbon, in particular natural gas, i.e. primary methane, having a high conversion efficiency and improved lifetime.

The inventors attempted to apply different $LaCrO_3$ powders as electrodes for their use as anode in methane. Following experimental tests (powder characterisation (XRD, SEM, TEM, EDS) conductivity and catalytic tests), it was possible to choose appropriate compositions from different substituents (Mg, Ca, Sr, Mn, Fe, Co, Ni, Cu and Nb).

In a first aspect, the present invention provides a use of a twice substituted lanthanide chromite of the perovskite $ABO_3$ type, as an anode material of a direct hydrocarbon fed, in particular methane fed SOFC, wherein the lanthanide of said lanthanide chromite is La (lanthanum) or Pr (praseodymium), and wherein said lanthanide chromite is substituted by Sr on A sites and by an element selected from the group consisting ofNi and Mg on B sites.

In a second aspect, the present invention profides a use of a twice substituted lanthanide chromite of the perovskite $ABO_3$ type, as a catalyst of an anode electrochemical oxidation reaction of a gaseous hydrocarbon, in particular methane, wherein the lanthanide of said lanthanide chromite is La (lanthanum) or Pr (praseodymium), and wherein said lanthanide chromite is substituted by Sr on A sites and by an element selected from the group consisting of Ni and Mg on B sites.

A third aspect of the present invention concerns a use of a twice substituted lanthanide chromite of the perovskite $ABO_3$ type, as a catalyst of a steam reforming reaction of a gaseous hydrocarbon, in particular methane, with $H_2O$ in vapour phase, wherein the lanthanide of said lanthanide chromite is La (lanthanum) or Pr (praseodymium), and wherein said lanthanide chromite is substituted by Sr on A sites and by an element selected from the group consisting of Ni and Mg on B sites.

A fourth aspect of the present invention concerns a use of a twice substituted lanthanide chromite of the perovskite $ABO_3$ type, as a catalyst of a $CO_2$ reforming reaction of a gaseous hydrocarbon, in particular methane, wherein the lanthanide of said lanthanide chromite is La (lanthanum) or Pr (praseodymium), and wherein said lanthanide chromite is substituted by Sr on A sites and by an element selected from the group consisting ofNi and Mg on B sites.

In an embodiment, the present invention provides the use of a Sr and Ni substituted lanthanum chromite of formula $La_{1-x}Sr_xCr_{1-y}Ni_yO_3$ with the proviso that:

$0.01 < x < 0.3$ and
$0.01 < y < 0.5$

in particular with the proviso that:

$0.1 < x < 0.2$ and
$0.05 < y < 0.2$.

In a further embodiment, said lanthanide in the use of the present invention is Praseodymium.

In a further embodiment, the present invention provides the use of $La_{0.85}Sr_{0.15}Cr_{0.9}Ni_{0.1}O_3$ for making an anode of a SOFC.

In a further aspect, the present invention provides a SOFC, with a solid electrolyte layer and at least one anode layer constituting a stratified structure, characterised in that said anode layer incorporates the twice substituted lanthanide chromite used in the present invention, and in that said stratified structure comprises a composite layer comprising a major amount of the substituted lanthanide chromite and a minor amount of the material of said electrolyte layer.

In an embodiment of the SOFC of the present invention, the substituted lanthanide chromite is a lanthanum chromite of the invention, in particular is $La_{0.85}Sr_{0.15}Cr_{0.9}Ni_{0.1}O_3$, and in particular that the electrolyte is YSZ or ceria.

In a further embodiment of the SOFC of the invention, the stratified structure comprises one composite layer located at the interface of the anode with the electrolyte and a plurality of layers consisting of the lanthanide chromite.

In another embodiment of the SOFC of the invention, the minor amount of SOFC electrolyte is between 15 % and 40 % in weight, in particular about 20 % in weight.

In another embodiment of the SOFC of the invention, the anode layer is obtained by providing the substituted lanthanide chromite as a perovskite powder, depositing at least one layer comprising said perovskite powder on a SOFC electrolyte member, thereby forming a stratified structure, and sintering said stratified structure at a temperature of between 1000°C and 1300°C, in particular 1050°C and 1200°C, more particularly at about 1100°C.

According to a further embodiment, the invention proposes the use of a twice substituted lanthanide chromite as an anode material of a direct hydrocarbon fed, in particular methane fed SOFC, wherein said lanthanide chromite is substituted by Sr on A sites and by Ni or Cu on B sites.

Ni is a particularly preferred substituent for B sites. Copper (Cu) has been tested by the inventors as an anode material in its pure form or in combination with Ni. It has also been used as a composite with an oxide such as YSZ and ceria. Its activity towards $CH_4$ oxidation was very promising even though a constant electric load was necessary to maintain the cell stability for a long time.

The inventors found that the degradation reactions at the anode was inhibited when relatively low substitution levels were adopted. Therefore, the invention preferably proposes a use of a Sr and Ni substituted lanthanum chromite of formula $La_{1-x}Sr_xCr_{1-y}Ni_yO_3$ with the proviso that:

0.01 < x < 0.3 and
0.01 < y < 0.5

and more preferably with the proviso that:

0.1 < x < 0.2 and
0.05 < y < 0.2.

A particularly preferred anode material is $La_{0.85}Sr_{0.15}Cr_{0.9}Ni_{0.1}O_3$.

According to another preferred embodiment of the invention, the lanthanide is Praseodymium. Praseodymium (Pr) is known to have an interesting catalytic activity when used as a cathode catalyst at the interface in SOFC and is known to be the most active catalyst among rare earth oxides. It has also been used by the inventors for $CH_4$ fed SOFC anode applications and found to be very promising.

According to another embodiment, the invention provides a SOFC comprising a solid electrolyte layer and at least one anode layer constituting a stratified structure, said anode layer incorporating an effective amount of a twice substituted lanthanide chromite, wherein said lanthanide chromite is substituted by Sr on A sites and by Ni or Cu on B sites and wherein said stratified structure comprises a composite layer incorporating a major amount of said subsituted lanthanide chromite and an minor amount of the material of said electrolyte layer. The selected chromite provides high conversion rates and a low surface degradation and the composite layer provides a good adhesion between the electrolyte layer and the anode.

Preferably, the stratified structure comprises at least one or more composite layer located at the interface of said anode with said electrolyte and a plurality of layers consisting of said lanthanide chromite.

Preferably, the composite layer comprises an amount of between 15 and 40 % in weight of the electrolyte, in particular YSZ or ceria, and according to a particularly preferred embodiment about 20 % in weight of said electrolyte.

According to a preferred process for making the SOFC of the invention, the anode layer is obtained by providing said substituted lanthanide chromite as a perovskite powder, depositing at least one layer comprising said perovskite powder on an electrolyte member like YSZ or ceria, thereby forming a stratified structure, and sintering said stratified structure at a temperature of between 1000°C and 1300°C, in particular 1050°C and 1200°C, more particularly at about 1100°C.

Other features and advantages of the invention will appear to those skilled in the art from the following detailed description of the preparation of a particularly preferred anode material, of experimental cells using the same and of comparative tests with anodes and SOFCs using anode materials of the prior art. This description is made in connection with the drawings, which show the following:

- Figure 1: schematic view of a cell showing the 8YSZ Kerafol electrolyte, the LSM and the Pt-mesh cathode, the Pt reference electrode and on the opposite side the LC anode. a: non-sealed, b: sealed, and c: symmetrical cell.

- Figure 2: schematic view of the non-sealed testing set-up (not on scale).

- Figure 3: schematic view of the sealed testing set-up (not on scale).

- Figure 4: schematic view of a symmetrical testing set-up (not on scale).

- Figure 5: 3 layered $La_{0.85}Sr_{0.15}Cr_{0.9}Ni_{0.1}O_3$ anodes. Sintering temperature effect on the potential-current and power curves, in 3 % $H_2O$, at a working temperature of 900°C, a: $H_2$ and b: $CH_4$, and 840°C, c: $H_2$. Sintering temperatures: (△,▲)1200°C (E2c), (□,■) 1100°C (E2d) and (△,▼) 1050°C (E2f). Closed symbols: potential current; open symbols: power density curves.

- Figure 6: 3 layered $La_{0.85}Sr_{0.15}Cr_{0.9}Ni_{1.1}O_3$ anodes. Sintering temperature effect on the anode overpotential, in 3 % $H_2O$, at a working temperature of a: 900°C, and b: 840°C. Sintering temperatures: (△,▲) 1200°C (E2c), (□,■), 1100°C (E2d) and (△,▼) 1050°C (E2f). Closed symbols: $H_2$; open symbols: $CH_4$.

- Figure 7: 1 layered 55.7:44.3 $La_{0.85}Sr_{0.15}Cr_{0.9}Ni_{0.1}O_3$+8YSZ, + 3 layers $La_{0.85}Sr_{0.15}Cr_{0.9}Ni_{0.1}O_3$ composite anodes. Sintering temperature effect on the potential-current and power curves, in 3 % $H_2O$, at a working temperature of 900°C, a: $H_2$ and b: $CH_4$, and 840°C, c: $H_2$ and d: $CH_4$. Sintering temperatures: (△,▲) 1200°C (E2b), (□,■), 1100°C (E2e) and (△,▼) 1050°C (E2g). Closed symbols: potential current; open symbols: power density curves.

- Figure 8: 1 layered 55.7:44.3 $La_{0.85}Sr_{0.15}Cr_{0.9}Ni_{0.1}O_3$+8YSZ, + 3 layers $La_{0.85}Sr_{0.15}Cr_{0.9}Ni_{0.1}O_3$ composite anodes.

Sintering temperature effect on the anode overpotential, in 3 % $H_2O$, at a working temperature of a: 900°C, and b: 840°C. Sintering temperatures: ($\triangle$,$\blacktriangle$) 1200°C (E2b) and ($\square$,$\blacksquare$) 1100°C (E2e). Closed symbols: $H_2$; open symbols: $CH_4$.

- Figure 9: SEM micrographs showing the morphology of different 3 layered $La_{0.85}Sr_{0.15}Cr_{0.9}Ni_{0.1}O_3$ anodes, sintered at a: 1200°C (E2c), b: 1100°C (E2d) and c: 1050°C (E2f).

- Figure 10: SEM micrographs showing the morphology of different 1 layered 55.7:44.3 $La_{0.85}Sr_{0.15}Cr_{0.9}Ni_{0.1}O_3+8YSZ$, + 3 layered $La_{0.85}Sr_{0.15}Cr_{0.9}Ni_{0.1}O_3$ composite anodes, sintered at a: 1200°C (E2b), b: 1100°C (E2e) and c: 1050°C (E2g). The composite $La_{0.85}Sr_{0.15}Cr_{0.9}Ni_{0.1}O_3+8YSZ$ stands in the first 5 $\mu$m near the YSZ electrolyte.

- Figure 11: SEM micrographs of $La_{0.85}Sr_{0.15}Cr_{0.9}Ni_{0.1}O_3$ (E2c) anode showing a: a topotactic change at the interface (in the X region), and b: an EDAX linescan analysis of the same region, indicating eventually the formation of a $SrZrO_3$ phase (there is an uncertainty in the quantitative analysis of Sr and Zr as their EDAX peaks overlap).

- Figure 12: $La_{0.85}Sr_{0.15}Cr_{0.9}Mg_{0.1}O_3$ anode (B21). Effect of the cell polarisation on the anode impedance at OCV. (O) initial anode impedance, after $H_2$ introduction at 850°C; ($\triangle$) the same impedance after polarisation in $H_2$. Inset numbers mark each decay in frequency.

- Figure 13: Electrocatalysis on $La_{0.85}Sr_{0.15}Cr_{0.9}Mg_{0.1}O_3$ anode (B21). The cell Rp decrease upon polarisation at 1010, 900, 800, 700, 600, 500 and 400 mV in $H_2$ + 3 % $H_2O$, at 850°C. Inset numbers mark each decay in frequency.

- Figure 14: $La_{0.85}Sr_{0.15}Cr_{0.9}Mg_{0.1}O_3$ anode (B21). Overpotential in humidified $H_2$ and $CH_4$, and in dry $CO_2/CO$ (ratio $\approx$ 0.14), at 850°C.

- Figure 15: $La_{0.85}Sr_{0.15}Cr_{0.9}Mg_{0.1}O_3$ anode (B21). Overpotential effect on the series resistance, Re, at 850°C. $H_2$ + 3%$H_2O$.

- Figure 16: $La_{0.85}Sr_{0.15}Cr_{0.9}Mg_{0.1}O_3$ anode (B21). Aging effect on the stability of the anode power and current density output. T=850°C, $H_2$ + 3 % $H_2O$.

- Figure 17: $La_{0.85}Sr_{0.15}Cr_{0.9}Mg_{0.1}O_3$ anode (B21). Polarisation effect on the rate limiting processes, $R_1$-$C_1$, $R_2$-$C_2$ and $R_3$-$C_3$. T=850°C, in $H_2$ + 3 % $H_2O$.

- Figure 18: $La_{0.85}Sr_{0.15}Cr_{0.9}Mg_{0.1}O_3$ anode (B21). $H_2O$ effect on the impedance spectra in $H_2$, at OCV and 850°C. Inset numbers in % refer to the % of $H_2O$ in $H_2$.

- Figure 19: $La_{0.85}Sr_{0.15}Cr_{0.9}Mg_{0.1}O_3$ anode (B24)., Effect of the working temperature on the initial (before polarisation) OCV impedance spectra. a: $H_2$, b: $CH_4$, + 3 % $H_2O$. Inset numbers mark each decay in frequency.

- Figure 20: $La_{0.85}Sr_{0.15}Cr_{0.9}Mg_{0.1}O_3$ anode, in the sealed configuration (B30, B37). a: OCV measurements as a function of the steam to carbon ratio (S/C) and temperature. The thermodynamic equilibria for different gases are also shown along with measured values for an Au electrode. b: Example of MS analysis. 8YSZ pellet of 110 $\mu$m, Re $\approx$ 17.6 $\Omega$cm2,22 mA/$cm^2$ at short circuit in humidified $H_2$ with an OCV of 1089 mV.

- Figure 21: $La_{0.85}Sr_{0.15}Cr_{0.9}Mg_{0.1}O_3$ anode (B20). MS analysis of the gas composition at the outlet of the sealed cell. Cell voltage effect on the $CH_4$ conversion at 850°C. The low current density is thought to stem from bad current collection in the free standing contacts. Re $\approx$ 17.6 $\Omega cm^2$, 8YSZ pellet of 110 $\mu$m and 30 m1N/min $CH_4$ flow.

- Figure 22: $La_{0.85}Sr_{0.15}Cr_{0.9}Mg_{0.1}O_3$ anode (B21). Effect of the gas composition on the anode performance. In : $H_2$ and $CH_4$, + 3 % $H_2O$ and dry $CO_2/CO$ (ratio of 0.14), at 850°C.

- Figure 23: $La_{0.85}Sr_{0.15}Cr_{0.9}Mg_{0.1}O_3$ anode (B21). Effect of the $CO_2/CO$ ratio on the cell performance at 850°C. Fuel total rate of 200 ml/min.

- Figure 24: $La_{0.85}Sr_{0.15}Cr_{0.9}Mg_{0.1}O_3$ anode (B29). Effect of the temperature on the anode performance in a: $H_2$ and b: $CH_4$, 3 % $H_2O$.

- Figure 25: $La_{0.85}Sr_{0.15}Cr_{0.9}Mg_{0.1}O_3$ anode (B21). $H_2O$ effect on $CH_4$ oxidation at 850°C. (▲) 4.8 % $H_2O$ (S/C ≈ 0.05) and (●) 10.4 % $H_2O$ (S/C ≈ 0.116).

- Figure 26: SEM micrographs showing the morphology of different 1 layered 56:44 lanthanum chromite +8YSZ, + 3 layered lanthanum chromite composite anodes, sintered at 1100°C for 4 h. The thickness of the composite lanthanum chromite +8YSZ was 5 μm near the YSZ electrolyte. a: $LaCrO_3$ (E5f), b: $La_{0.85}Sr_{0.15}CrO_3$ (E5a), c: $LaCr_{0.9}Co_{0.1}O_3$ (E5I) and d: $LaCr_{0.9}Ni_{0.1}O_3$ (E5e).

- Figure 27: 1 layered 56:44 LC:YSZ + 3 layered LC composite anodes sintered at 1100°C/4h. Substitutent effect on the potential-current and power curves, in 3 % $H_2O$ at 900°C, a: $H_2$ and b: $CH_4$, and 840°C, c: $H_2$ and d: $CH_4$. (+,x) $LaCrO_3$ (E5f), (♦,◊) $La_{0.85}Sr_{0.15}CrO_3$ (E5a), (►,>) $LaCr_{0.9}Co_{0.1}O_3$ (E5i) and (●,○) $LaCr_{0.9}Ni_{0.1}O_3$ (E5e). The $La_{0.85}Sr_{0.15}CrO_3$ anode performance is not fully shown, and is used to indicate the difference existing with the B-site substituted LCs.

- Figure 28: Evolution of the corrected electrolyte resistance, Re, on the anode side, showing an additional ohmic drop in the adhesive layer. The 150 μm thick 8YSZ Kerafol electrolyte is supposed to give an ohmic drop of 0.38 $\Omega cm^2$ and 0.27 $\Omega cm^2$ at 850°C (V) and 900°C (Δ) respectively.

- Figure 29: 1 layered 56:44 LC:YSZ + 3 layered LC composite anodes sintered at 1100°C/4h. Substitutent effect on the overpotential curves, in 3 % $H_2O$ at 900°C, a: $H_2$ and b: $CH_4$, and 840°C, c: $H_2$ and d: $CH_4$. (+) $LaCrO_3$, (E5f), (♦) $La_{0.85}Sr_{0.15}CrO_3$ (E5a), (►) $LaCr_{0.9}Co_{0.1}O_3$ (E5i), (○) $LaCr_{0.9}Ni_{0.1}O_3$ (E5e) and (●) $La_{0.85}Sr_{0.15}Cr_{0.9}Ni_{0.1}O_3$ (E2e).

- Figure 30: 1 layered 56:44 $La_{0.85}Sr_{0.15}CrO_3$+8YSZ, + 3 layers $La_{0.85}Sr_{0.15}CrO_3$ $La_{O·85}Sr_{O·15}CrO_3$ composite anode (E5a), sintered at 1100°C. Potential-current curves in a: $H_2$ and b: $CH_4$, in 3 % $H_2O$, at a working temperature of (Δ,▲) 900°C, and (Δ,▼) 840°C.

- Figure 31: $LaCr_{0.9}Mg_{0.1}O_3$ anode (B41). Very low power output is obtained without an intermediate adhesive layer. T = 830°C in wet $H_2$.

- Figure 32: 1 layered 78.2:21.8 $La_{0.85}Sr_{0.15}Cr_{0.9}Ni_{0.1}O_3$+8YSZ, + 3 layered $La_{0.85}Sr_{0.15}Cr_{0.9}Ni_{0.1}O_3$ composite anode (E7b), sintered at 1100°C. Potential-current curves in a: $H_2$ (at 874°C) and b: $CH_4$, in 3 % $H_2O$.

- Figure 33: 1 layered 78.2:21.8 $La_{0.85}Sr_{0.15}Cr_{0.9}Ni_{0.1}O_3$+8YSZ, +3 layered $La_{0.85}Sr_{0.15}Cr_{0.9}Ni_{0.1}O_3$ composite anode (E7b), sintered at 1100°C. a: The increase of the anode temperature as a function of the current density in $H_2$ + 3 % $H_2O$ at 874°C; b: The temperature dependence of the anodic electrolyte resistance Re in $CH_4$, + 3 % $H_2O$.

- Figure 34: 1 layered 78.2:21.8 $La_{0.85}Sr_{0.15}Cr_{0.9}Ni_{0.1}O_3$+8YSZ, + 3 layered $La_{0.85}Sr_{0.15}Cr_{0.9}Ni_{0.1}O_3$ composite anode (E7b), sintered at 1100°C. Overpotential curves in $H_2$ (at 874°C) and $CH_4$, in 3 % $H_2O$.

- Figure 35: 1 layered 55.7:44.3 $La_{0.85}Sr_{0.15}Cr_{0.9}Ni_{0.1}O_3$+8YSZ + 1 layered $La_{0.85}Sr_{0.15}Cr_{0.9}Ni_{0.1}O_3$ composite anode (E7c). Stability of the system in $H_2$ + 3 % $H_2O$ at 900°C. Effect of time on the stability: (○,●) 47 min, (□,■) 780 min (Δ,▲) 1148 min and (Δ,▼) 2260 min.

- Figure 36: Slow decrease of the conductivity with time, when the gas atmosphere of the pellets of (Δ) LCaCNi and (o) LCaCMg is switched from air to $H_2$ + 3 % $H_2O$.

- Figure 37: $La_{0.85}Sr_{0.15}Cr_{0.9}Mg_{0.1}O_3$ anode (B24). Arrhenius plot for the 2 processes in a-b. wet $H_2$ and c-d. in wet $CH_4$. (Δ,▼) first process ($R_1$-$C_1$) and.(Δ,▲) second process ($R_2$-$C_2$). n1: 0.53-0.65; n2: 0.57-0.7; L ≈ 800nH, maximum error 1.2-4 %.

- Figure 38: Possible mechanism for the electrochemical reaction of methane on LCs. Formaldehyde, $CH_2O$, is reported to be formed in many cases in literature 58.

**Powder preparation**

Different lanthanum chromite powders were prepared according to the formula $La_{1-x}A_xCr_{1-y}B_yO_3$ through a modified citrate route [5], by dissolving the nitrate precursors (Fluka, > 99 % purity except for $Cr(NO_3)_3.9H_2O$ from Acros,

99 %) in 1M aqueous citric acid solution. Most of the water was removed by heating at 80-90°C in vacuum. The gels obtained were pyrolized at 110°C for 20 h, then at 200°C for 2 h and the resulting powders were crushed to size by dry ball-milling. A high temperature calcination at 1100°C was then necessary to get pure perovskites, as confirmed by X-ray powder diffraction[31] (note that the detection limit for XRD is of $\approx$ 1 %). The surface areas and particle size distributions of these powders varied between 1 and 3 $m^2$/g and 0.8 and 2.6 $\mu$m respectively[31]. In this study, Ca and Sr were used as an A-site substituent, whereas Mg, Mn, Fe, Co and Ni were incorporated on the B-site. These powders were previously characterised by XRD, XPS, TEM-EDS and catalytic tests[31].

**Slurry preparation and cell fabrication**

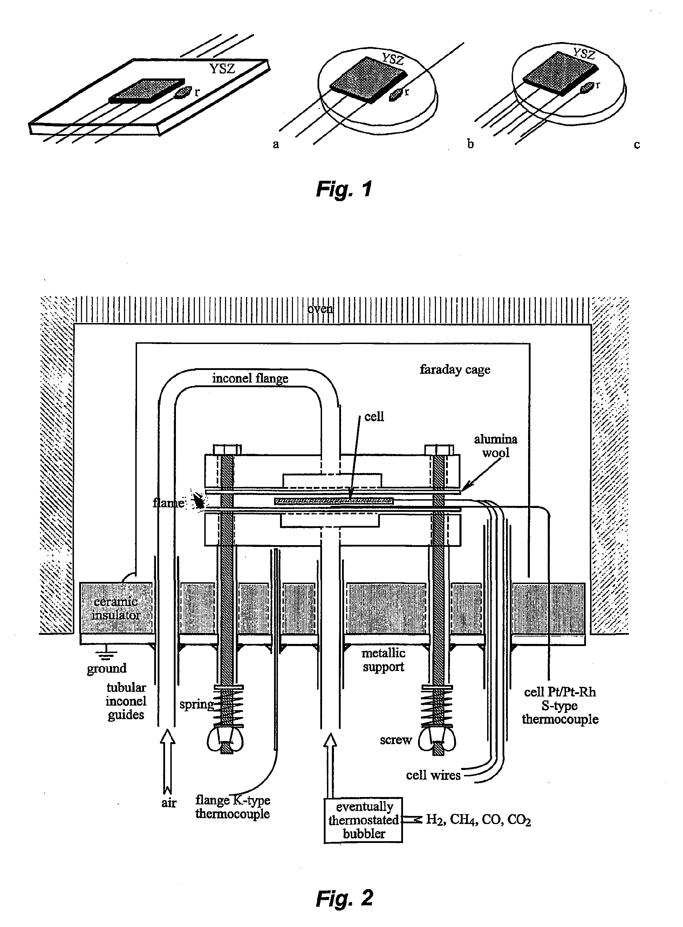

Terpineol-ethyl cellulose-based slurries were prepared with the proportion of 56.50:39.55:3.95 ceramic powder:terpineol:ethyl cellulose, using isopropanol as a solvent. The slurries were obtained by evaporating the solvent under mechanical stirring on a heated plate. Composite slurries of LCs (substituted $LaCrO_3$) with Tosoh 8YSZ (TZ-8Y) powders were also made using appropriate amounts of LCs and 8YSZ powders. The LC-based pastes were then screen-printed on an 10 % HF etched 3 cm x 3 cm or circular ($\varnothing \approx$ 2.2 cm) Kerafol or self made tape-casting tapes of 8YSZ electrolytes sintered at 1500°C/3h, to form electrodes of 1 $cm^2$ (square tapes) or 0.38 $cm^2$ (circular tapes) area. A 5 min etching, at 60°C, was implemented in order to remove surface impurities [33]. The number of layers and their composition varied from sample to sample. As current collector, an Au electroplated-Pt mesh was pressed in the last layer, or for the special case of the circular cells used in the sealed configuration (see below) no current collector was used at that stage. Au was used in order to prevent $CH_4$ reaction with Pt, as carbon deposition was observed on bare Pt meshes which led ultimately to their complete disintegration. On the opposite side of the electrolyte, a three layered 1 $cm^2$ (square tapes) or 0.38 $cm^2$ (circular tapes) stoichiometric lanthanum strontium manganite (LSM, $La_{0.85}Sr_{0.15}MnO_3$) was symmetrically deposited with a Pt mesh current collector, or in the case of a symmetrical cell (see below and Figure 1c), the same anode is applied with an Au electroplated Pt mesh. The cell thus obtained was then sintered under load (thermocompression) between 2 alumina cloths. A heating ramp of 90°C/h from room temperature to 600°C was used in order to burn the organics, followed by a ramp of 180°C/h until the desired temperature. The cell was then kept at this temperature for 4 h and left to cool down to room temperature. Subsequently, a 5 mm x 3 mm Pt electrode was pasted nearby (3 mm distance) the cathode as reference electrode, and in the special case of the circular cells used in the sealed configuration, a porous Au-LC paste was brushed on the anode, then sintered at 950°C for 1 h with a heating ramp of 180°C/h. A schematic view of the different cells is given in Figure 1.

The parameters addressed in this study are the lanthanum chromite composition, the presence of an adhesion layer made of LC + 8YSZ composite between the YSZ electrolyte and the anode, the sintering temperature and the number of anode layers. The fact of using Pt meshes on the anode side, with their known activity toward $CH_4$, does not prevent to compare the different electrodes, as the preparation conditions are similar. Also, Au electroplating should prevent Pt from reacting heavily with $CH_4$.

**Electrochemical testing**

a. Non-sealed configuration

The square cells (type a, Figure 1) were mounted between inconel flanges with porous alumina felts on each side as electrical insulators and gas diffusers. This configuration was not sealed so that the excess fuel burned at the periphery of the cell. The tests were conducted in a Lenton EF 11/8 furnace. The gas inputs - air on the cathode side and fuel on the anode side - were controlled by rotameters, and the fuel line was heated in order to prevent water condensation. A valve allowed to switch between humidified $H_2$ or $CH_4$ to dry $CO/CO_2$ mixtures. Typically, air flow rate was of 300 ml/min whereas the fuel flow rate was set to 200 ml/min for $H_2$ and 70 ml/min for $CH_4$. Electrical contacts to the cell were made using silver wires welded to the Pt current collectors and taken to the outside of the oven through mullite tubes. The whole system was protected from electrical noise by a faradaic cage connected to the ground. A schematic view of the set-up is shown in Figure 2.

Thus mounted, the cells were heated to 840°C in 4 h under $H_2$ + 3% $H_2O$ on the fuel side and air on the cathode side. The flange temperature was monitored by a K-type thermocouple pressed on its base, whereas the cells' temperature was followed by one S-type (Pt/Pt 10% Rh) thermocouple inserted beneath the anode and protected by an alumina wool. The electrochemical characterisations were performed in most cases starting from 840°C in $H_2$ followed by a 1 night polarisation at 400 mV in order to activate the electrodes, specially the LSM cathode. The temperature was then raised to 900°C and ultimately the gas was switched to $CH_4$ + 3% $H_2O$.

b. Sealed configuration

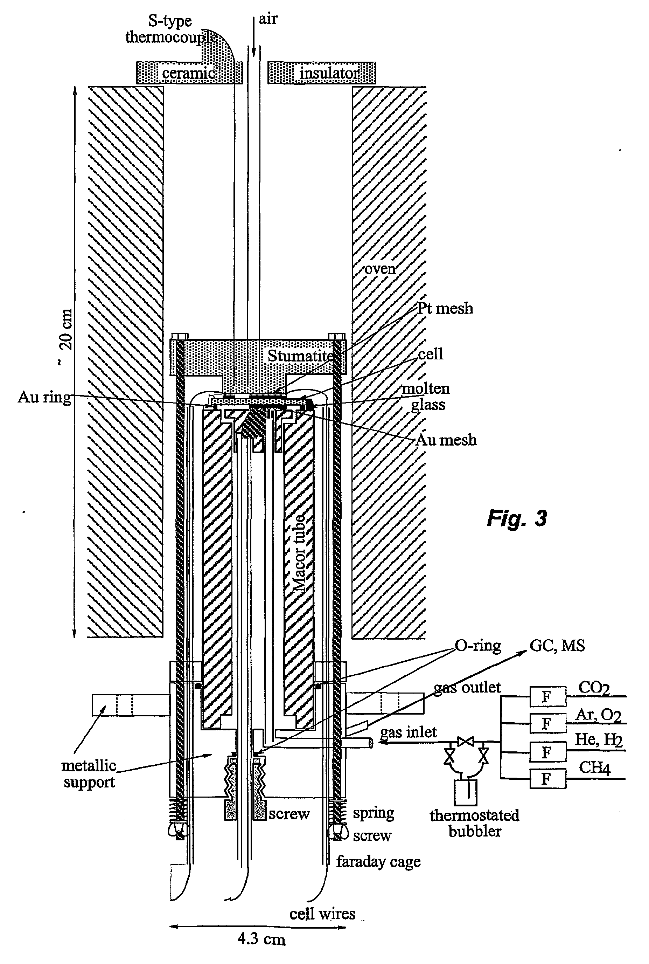

The circular cells (type b, Figure 1) were mounted over a machined Macor ceramic tube using an Au ring and self-made soda glass as sealing, with the anode set on the inside. The soda glass proved to be the most suitable among various commercial glass seals. The anode was then pressed to an Au mesh-current collector mounted on a Macor machined gas diffuser, and the whole cell was tightened using a machined Stumatite ceramic pressed on the cathode. This tightening allowed a better current collection and a higher stability of the seal. The electrical wires were passed through ceramic tubes protected by a metallic tubing or coating serving as faradaic cages. The cell was then mounted in a vertical oven (Horst, Germany) and heated to 860°C in 4 h under Ar for the anode and air for the cathode, in order to melt the glass seal properly. The fuel gas was introduced just below the anode and extracted by a thin alumina tube at the bottom. Ounce at the desired temperature, the fuel gas was switched to wet $H_2$ and the cell OCV monitored to check the seal tightness. The anode gas flow rates were set to 30 ml/min, whereas the cathode air flow rate was of 150 ml/min. The anode gases were all monitored by mass flow controllers, and humidified in an oil thermostated bubbler. The cell temperature was monitored by a K-type thermocouple placed at the cell height, and occasionally by an S-type thermocouple pressed on the cathode side of the cell. A schematic view is given in Figure 3. The outlet gases ($O_2$, $N_2$, Ar, $CH_4$, $H_2$, CO, $CO_2$ and eventually $C_2$s) were analysed by gas chromatography through syringe injection (Carlo Erba MFC500 and Gowmac instruments) and by a quadrupole mass spectrometer (Residual Gas Analyser, Spectra, Leda Mass Vision, HF-100, maximum mass of 100 a.m.u.). A Porapak Q column with He as carrier was used for Ar, $CH_4$, $CO_2$ and C2-compound analysis (Carlo Erba) whereas a Molecular Sieve 5Å with Ar carrier (Gowmac) was used for $H_2$, $O_2$, $N_2$, $CH_4$ and CO detection.

c. Symmetrical configuration

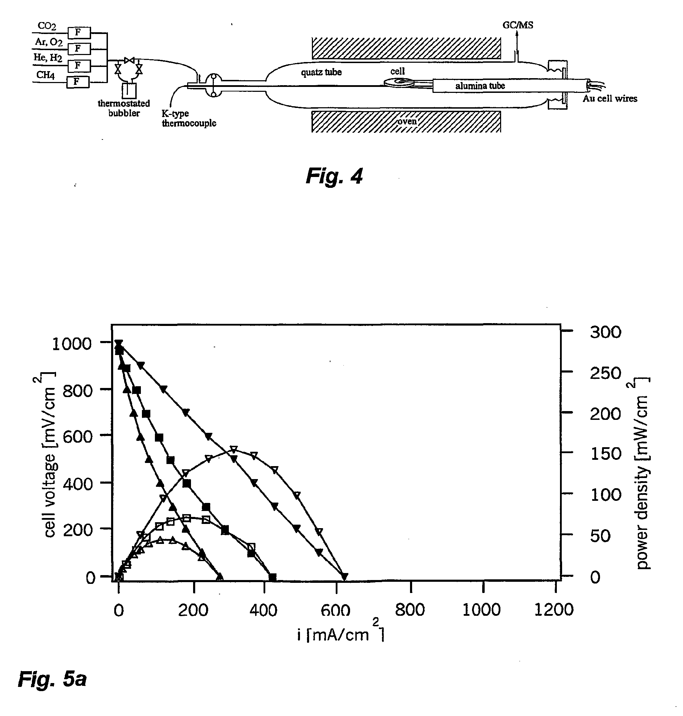

The circular cells (type c, Figure 1) were mounted in a horizontal quartz tube and electrical oven (Horst, Germany) and the electrical contacts to the cell were made using Au wires welded to the Au electroplated Pt current collectors (Figure 4). A K-type thermocouple, protected in a quartz tube was placed in near the cell and served to monitor its temperature.

Humidified $H_2$ and $CH_4$ were used in all set-ups in order to prevent excessively reducing conditions which might decompose the electrodes [28,32]. At all stages, current/potential (I/V) curves were performed on cells of type a and b with a Wenking potentiostat and impedance spectroscopy was conducted with an applied amplitude of 10 mV using a modified IM5 Zahner impedance analyser on all cell types. The frequency ranged from 100 kHz to 40 mHz. After the measurements, the pellets' cross-sections were imaged by a Philips secondary electron microscope (SEM). Some EDAX analysis were also performed in order to identify the interfacial composition between YSZ and the LCs as well as to estimate the composites layer thickness.

**Conductivity measurements and relaxation experiments**

LC rods of 13x6x5 mm$^3$ were pressed at 100 MPa and sintered at 1500°C for 4 h. The pellets thus obtained were polished to the $\mu$m scale. DC four probe conductivity measurements were carried out in the same set-up as for the symmetrical configuration, in air and humidified hydrogen, using Ag paste and Ag leads as current and potential lines. The oxygen partial pressure was monitored by a home-built YSZ sensor placed near the sample.

Transient measurements were also performed in another quartz tube specially designed with a small gas volume to allow for rapid gas change. For this purpose, thinner rods

($\approx 500$ $\mu$m) were used. This kind of measurement was done in order to estimate the surface exchange coefficient and the oxygen diffusion coefficient, in order to investigate the possibility of surface exchange limitations in the electrode reactions.

Before and after polishing the rods, as well as after the conductivity tests, SEM micrographs (XLF30, Philips) were made to evaluate the surface composition of the samples.

**Conductivity**

Sintered pellet densities of the different lanthanum chromites varied with the nature of the incorporated element, the substitution of Cr giving rise to a better densification [17,30]. Compared to the XRD calculated density, unsubstituted $LaCrO_3$ gave low density pellets (63 %), whereas the incorporation of Mn, Ni, Co and Mg increased the density to about 97, 95, 94 and 90 % respectively. Ca and Sr had less effect in this regard, 71 and 67 % respectively. A double substitution on the A-side with Ca or Sr and the B-side with Mg or Ni showed an enhanced effect on densification - 97, 98 and 98.5 % respectively for LSrCMg, LCaCNi and LCaCMg. Thus, it is seen that upon the incorporation of elements such as Mg, Mn, Co and Ni, all B-site substituents, the density is enhanced. This effect could be related to the lowered activity of Cr and thus the lowered CrOx species volatility which are responsible for the bad sintering of LC-based compounds[17]. Some of these results are summarised in Table 2.

By introducing elements such as Ca, Sr and the transition metals on the La and Cr sites in $LaCrO_3$, the substitution on the A or B-site being depend on the ionic radius of the element, electronic compensation occurs by the formation of holes at high oxygen partial pressure, i.e. the oxidation of Cr[III] to Cr[IV], or of oxygen vacancies at low $pO_2$ [34].

## Table 2: Summary of the initial electrolyte and polarisation resistances at OCV, Re and Rp respectively, given in units of $\Omega \cdot cm^2$.

| Anode composition | Cell Nr | Sintering temperature [°C] | H₂ 840°C Re | H₂ 840°C Rp | H₂ 900°C Re | H₂ 900°C Rp | CH₄840°C Re | CH₄840°C Rp | CH₄900°C Re | CH₄900°C Rp | 800°C σ air | 800°C σ H₂ |
|---|---|---|---|---|---|---|---|---|---|---|---|---|
| $La_{0.85}Sr_{0.15}Cr_{0.9}Ni_{0.1}O_3$ | E2c | 1200 | 1 | 15 | 1.1 | 7.9 | 0.7 | 34 | 0.9 | 25 | 14.8 | 1.9 |
| $La_{0.85}Sr_{0.15}Cr_{0.9}Ni_{0.1}O_3$ | E2d | 1100 | 1 | 2.5 | 1.2 | 2.6 | | - | 0.8 | 6.2 | | |
| $La_{0.85}Sr_{0.15}Cr_{0.9}Ni_{0.1}O_3$ | E2f | 1050 overnight | 0.7 / 0.86 | 0.4 / 0.9 | 0.9 / 0.8 | 0.7 / 0.9 | 0.7 | 4 | 0.8 | 3.6 | | |
| $La_{0.85}Sr_{0.15}Cr_{0.9}Ni_{0.1}O_3$ | E7b[1] | 1100 | 0.32 | 0.16 | 0.27 | 0.11 | 0.29 | - | 0.26 | - | | |
| $La_{0.85}Sr_{0.15}Cr_{0.9}Ni_{0.1}O_3$ | E2b | 1200 | 1.07 | 4.6 | 1.17 | 2.8 | 1 | 6.8 | 0.9 | 5 | | |
| $La_{0.85}Sr_{0.15}Cr_{0.9}Ni_{0.1}O_3$ | E2e | 1100 | 1 | 1.4 | 1 | 0.5 | 0.54 | | 0.5 | 2.8 | | |
| $La_{0.85}Sr_{0.15}Cr_{0.9}Ni_{0.1}O_3$ | E2g | 1050 | 1.8 | 1.6 | 1.6 | 0.9 | | | 1 | 5.1 | | |
| $La_{0.85}Sr_{0.15}Cr_{0.9}Ni_{0.1}O_3$ | E5h | 1100 | 2.7 | 1.8 | 2.2 | 1.4 | | | 1 | 4 | | |
| $La_{0.85}Sr_{0.15}Cr_{0.9}Ni_{0.1}O_3$ | E7c | 1100 | | | | | | | | | | |
| $La_{0.85}Sr_{0.15}CrO_3$ | E5b | 1100 | | | | | | | | | 2.6 | 0.9 |
| $La_{0.85}Sr_{0.15}CrO_3$ | E5a | 1100 | 0.5 | 1 | 0.5 | 0.5 | 0.6 | 2.4 | 0.4 | 2.1 | | |
| $LaCrO_3$ | E5f | 1100 | 9.6 | 13 | 8.8 | 5.6 | 7.1 | 23 | 8.8 | 13 | 0.4 | 0.05 |
| $LaCr_{0.9}Co_{0.1}O_3$ | E5i | 1100 | 1.6 | 7 | 1.4 | 3.4 | 1.4 | 19 | 1.4 | 9.9 | 5.8 | 0.6 |
| $LaCr_{0.9}Ni_{0.1}O_3$ | E5e | 1100 | 3.9 | 5.1 | 2.7 | 3.3 | 5 | 24 | 2 | 9 | 5.4 | 0.4 |
| $LaCr_{0.9}Mg_{0.1}O_3$ | B41 | 1100 | | | | | | | | | 5.1 | 0.16 |
| $La_{0.85}Ca_{0.15}Cr_{0.9}Mg_{0.1}O_3$ | B20 | 1100 | | | | | | | | | 9.7 | 0.3 |
| $La_{0.85}Ca_{0.15}Cr_{0.9}Mg_{0.1}O_3$ | B29 | 1100 / after polarization | 0.5[2] / 0.37 | 19.5 / 2.3 | | | 0.7 | | | | | |
| $La_{0.85}Sr_{0.15}Cr_{0.9}Mg_{0.1}O_3$ | B21 | 1100 / after polarization | 0.4[3] / 0.37 | 21.5 / 1.7 | | | 0.85 | 6.1 | | | 14.7 | 1.3 |
| $La_{0.85}Sr_{0.15}Cr_{0.9}Mg_{0.1}O_3$ | B24 | 1100 | 0.4 | 32 | | | 0.4 | 35 | | | | |
| $La_{0.85}Sr_{0.15}Cr_{0.9}Mg_{0.1}O_3$ | B30 | 1100 | 17.6 | 9.1 | | | | | | | | |
| $La_{0.85}Sr_{0.15}Cr_{0.9}Mg_{0.1}O_3$ | B37 | 1050 | | | | | | | | | | |
| $La_{0.85}Sr_{0.15}Cr_{0.9}Mg_{0.1}O_3$ | E5d | 1100 | 1.2 | 1.3 | 1.4 | 1.6 | 1 | 6 | 1 | 6.2 | | |

The conductivities, σ, in air and in humidified $H_2$ (3% $H_2O$), are given in units of S/cm. It is to be noted that the conductivities of $La_{0.85}Ca_{0.15}Cr_{0.9}Ni_{0.1}O_3$ and $La_{0.85}Sr_{0.15}CrO_3$ are those of the Ca substituted compounds, as these values were not measured for the Sr substitution. [1]: cell temperature of 864°C and 874°C instead of 840°C and 900°C; [2] 828°C; [3] 800°C. Bold numbers correspond to measurements made after the cell degradation.

Due to the differences in rod densities, all conductivity measurements were normalised for a 100 % pellets density by using the approximation

$$d_{eff}/d_{theo} = \sigma_{eff}/\sigma_{theo} \qquad (3)$$

where deff and σeff are the measured density and conductivity respectively and dtheo and σtheo the theoretical density (XRD) and conductivity respectively. The conductivity trend observed are comparable to values extrapolated from literature data[34] and it followed the concentration of Cr[IV]. Ca or Sr substitution gave rise to a higher conductivity in air and

in humidified $H_2$ than the B site substituents.

**Effect of the sintering temperature**

Prior to the electrochemical tests, half cells were made by screen-printing $La_{0.85}Ca_{0.15}Cr_{0.9}Mg_{0.1}O_3$, $La_{0.85}Sr_{0.15}Cr_{0.9}Mg_{0.1}O_3$ and $La_{0.85}Sr_{0.15}Cr_{0.9}Ni_{0.1}O_3$ slurries on YSZ pellets. For these compositions, different sintering temperatures were investigated (1000-1300°C). Subsequently, these half cells were treated in $H_2$ + 3% $H_2O$ at 800°C for some hours. After cooling to room temperature, the adherence and the morphology of the electrodes were verified by abrasion tests (using a cutter) and in some cases by SEM imaging. Firing at 1100°C was optimal, whereas lower temperatures gave poor adherence while firing at 1200°C produced some surface reaction with YSZ [29].

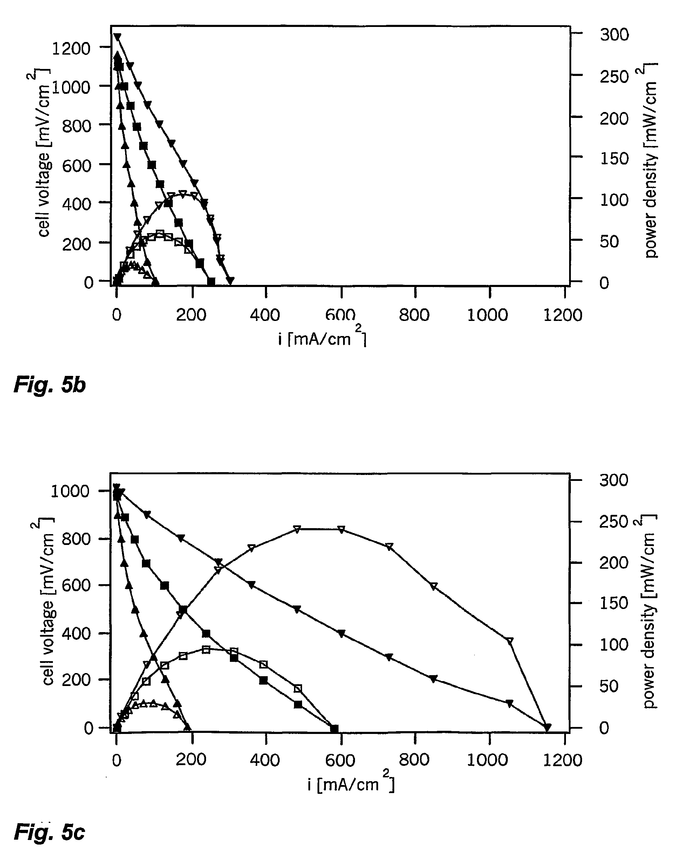

The effect of the sintering temperature was also studied in more details with the two systems, $La_{0.85}Sr_{0.15}Cr_{0.9}Ni_{0.1}O_3$ and 55.7:44.3 $La_{0.85}Sr_{0.15}Cr_{0.9}Ni_{0.1}O_3$:8YSZ, by electrochemical means. I/V curves and impedance spectroscopy analysis were performed with $H_2$ + 3% $H_2O$ or $CH_4$ + 3% $H_2O$ as fuel, at two temperatures, 840°C and 900°C, with unsealed cells sintered at 1050°C, 1100°C and 1200°C. I/V curves and power outputs, as well as anode overpotentials ($\eta a$) values are given in Figures 5 to 8.

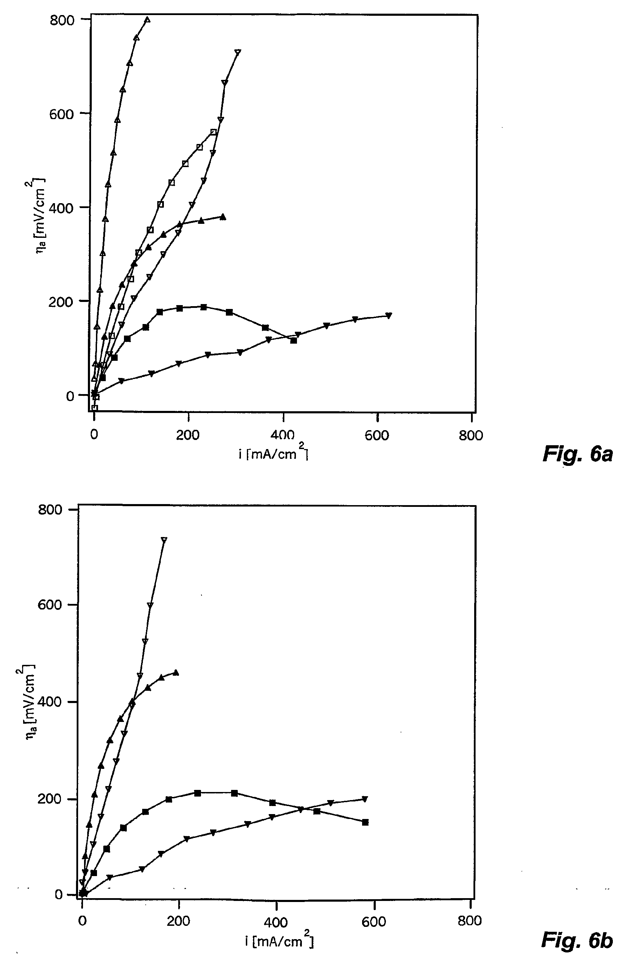

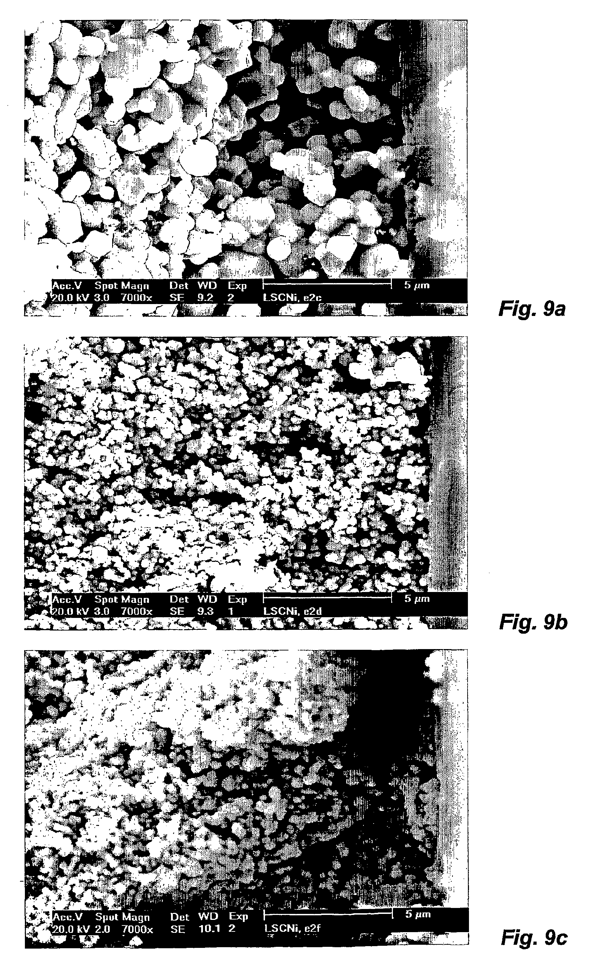

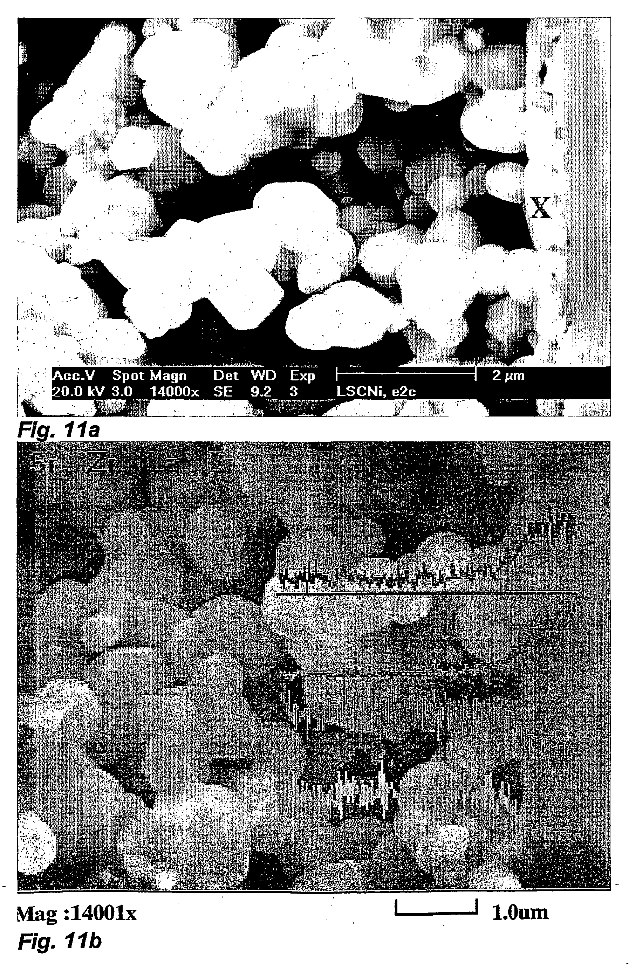

In the case of $La_{0.85}Sr_{0.15}Cr_{0.9}Ni_{0.1}O_3$, the current output was higher and the overpotential lower, in both humidified $H_2$ and $CH_4$, when the cell was sintered at 1050°C>1100°C> 1200°C (Figure 5,6). The maximum power output reached at 900°C in humidified $H_2$ at the sintering temperature of 1050°C was of 250 mW/$cm^2$ with a short circuit current of almost 1200 mA/$cm^2$. However, the cell performance was only stable when sintered at 1200°C. For the 1100°C and 1050°C sintering, the performance degraded rapidly with time as observed by impedance spectroscopy. The anodic polarisation resistance values, Rp, for the cell sintered at 1050°C increased by 2.25 times overnight, while the anodic electrolyte resistance, Re, changed by a factor of 1.2, resulting in the rapid degradation of the current output (Table 2). Also, the Rps were significantly higher with increasing sintering temperatures, increasing 37 and 11 times in humidified $H_2$ at 840°C and 900°C respectively, and 7 times in humidified $CH_4$ at 900°C, between cells sintered at 1050°C and 1200°C. SEM micrographs show densification of the anode structure the higher the sintering temperature (Figure 9). The mean anode grain size was of 1 $\mu$m at 1200°C whereas it was in the submicron scale at lower sintering temperatures. From the micrographs, the structure seemed to be more loose at 1050°C as after the test some delamination was observed. SEM-EDAX analysis made on the 1200°C sintered anode showed a topotactic reaction between the $La_{0.85}Sr_{0.15}Cr_{0.9}Ni_{0.1}O_3$ electrode and the YSZ, most probably due to $SrZrO_3$ formation (Figure 11).

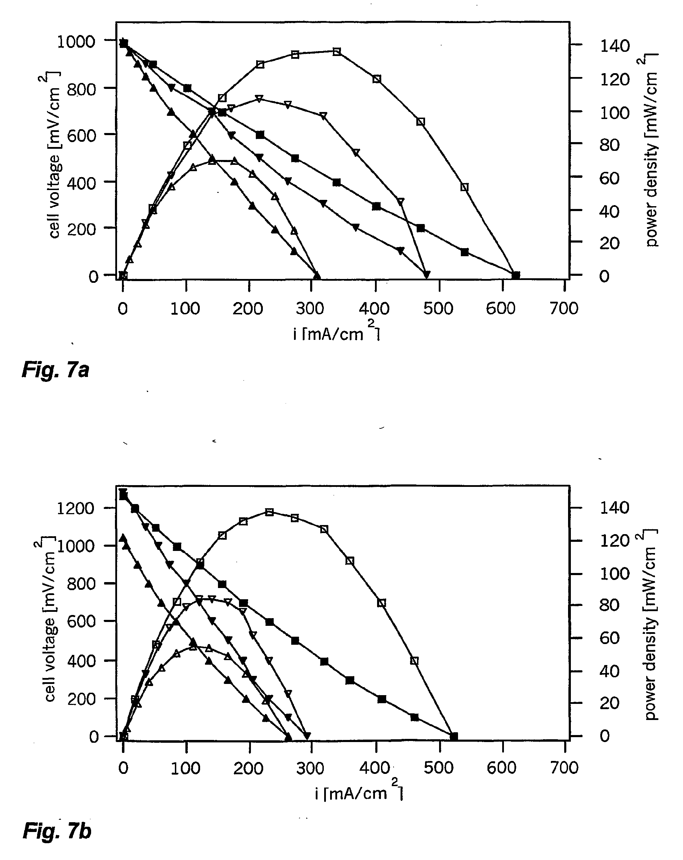

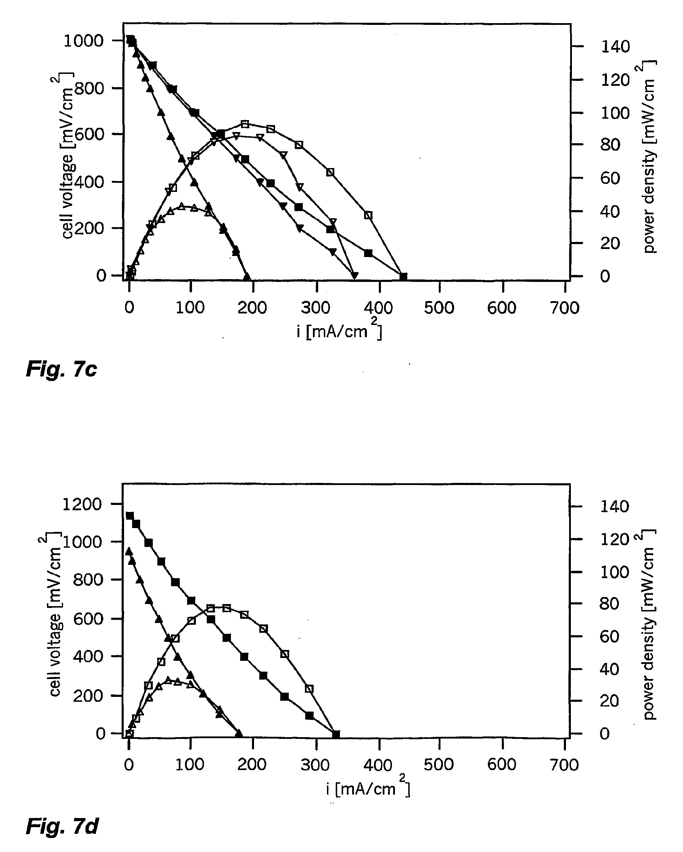

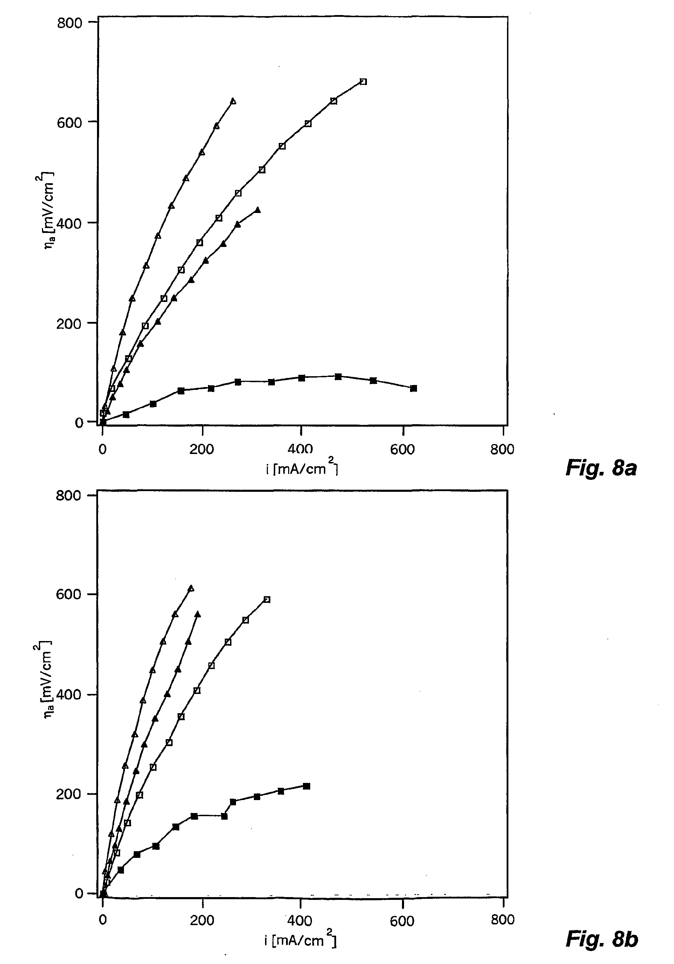

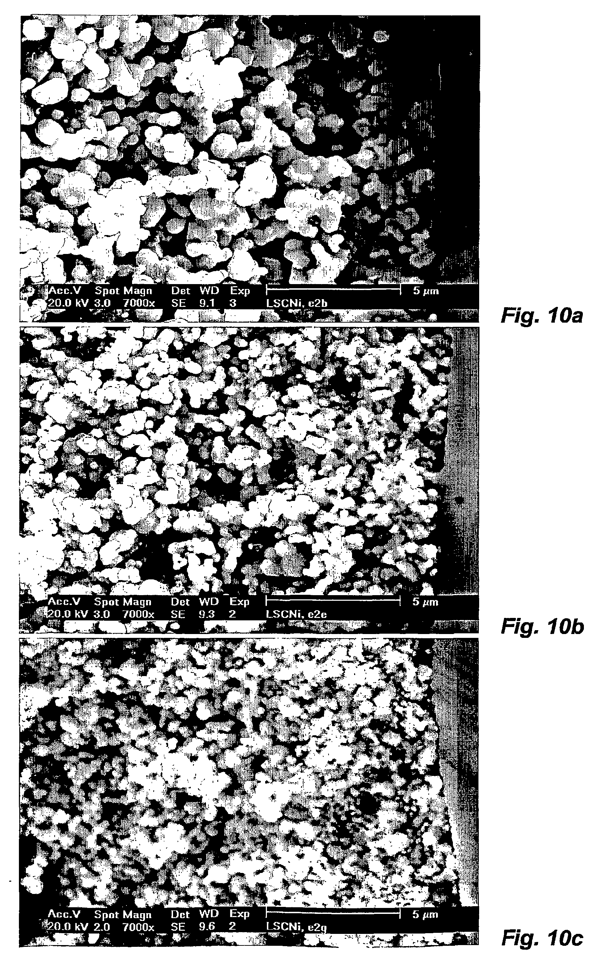

For 55.7:44.3 $La_{0.85}Sr_{0.15}Cr_{0.9}Ni_{0.1}O_3$:8YSZ, the current output is higher and the overpotential lower when the cell was sintered at 1100°C<1050°C<1200°C, in both humidified $H_2$ and $CH_4$ (Figure 7,8). The maximum power output reached at 900°C at the sintering temperature of 1100°C was of 140 mW/$cm^2$ with a short circuit current of more than 600 mA/$cm^2$ in humidified $H_2$ and 500 mW/$cm^2$ in humidified $CH_4$. It is interesting to see that the power outputs in humidified $H_2$ and $CH_4$ are of the same amplitudes. The cell performances were stable for the cases of 1200°C and 1100°C over a period of more than 1 day. For the sintering temperature of 1050°C, the stability was less pronounced, and this was most probably due to delamination as observed post-mortem by SEM. YSZ composites seem to sinter badly at 1050°C. As for the case of $La_{0.85}Sr_{0.15}Cr_{0.9}Ni_{0.1}O_3$ anodes, the higher the sintering temperature the denser the electrodes (Figure 10). The mean thickness of the adhesion composite layer was estimated by line-scan EDAX analysis to be of approximately 5 $\mu$m. The Re and Rp followed a similar trend with sintering temperature, i.e., 1100°C<1050°C<1200°C (Table 2). The Rp was lowered by a factor of 3 and 5.6 in humidified $H_2$ at 840°C and 900°C respectively, and 1.8 in humidified $CH_4$ at 900°C, between 1200°C and 1100°C.

It is thus observed that in both cases, the Re was higher than the expected value for YSZ electrolyte. For a 150$\mu$m thick Kerafol 8YSZ plate, the electrolyte ohmic loss is expected to be of 0.38 and 0.27 $\Omega cm^2$ at 840°C and 900°C respectively. Also, in both $La_{0.85}Sr_{0.15}Cr_{0.9}Ni_{0.1}O_3$ and 55.7:44.3 $La_{0.85}Sr_{0.15}Cr_{0.9}Ni_{0.1}O_3$:8YSZ anodes, the sintering temperature of 1100°C was optimal. This temperature was adopted hereafter. The application of an adhesive layer also seemed to increase the stability of the system, as in the absence of the layer delamination was observe to occur rapidly.

**Effect of polarisation on the cell performance**

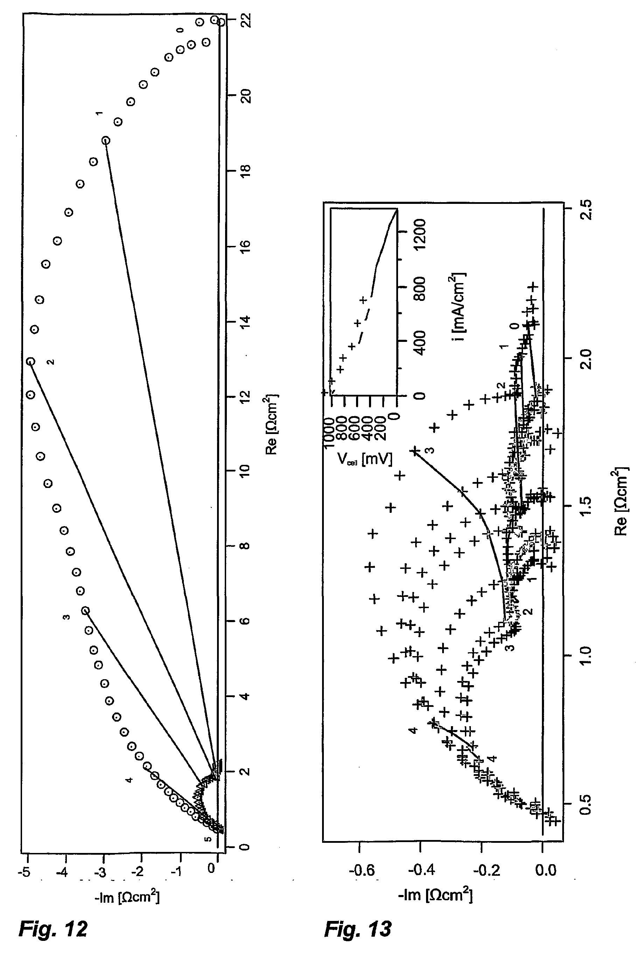

The impedance analysis of two set of anodes, a LaCaCrMg (B29) and a LaSrCrMg (B21), sintered at 1100°C, show clearly the influence of polarisation on the anode formation (Table 2). Prior to the passage of current, the polarisation resistance, Rp, measured in humidified $H_2$ at 850°C, were of 19.5 and 21.5 $\Omega cm^2$, for the first and the second electrode respectively. After one night polarisation, these resistances dropped to 2.3 and 1.7 $\Omega cm^2$ respectively, by a factor of approximately 10 (see Figure 12). The summit frequencies tended to increase after polarisation. The drop in the polarisation resistance occurred in general after 1 h of polarisation. This phenomena is similar to that observed on LSM electrodes [35].

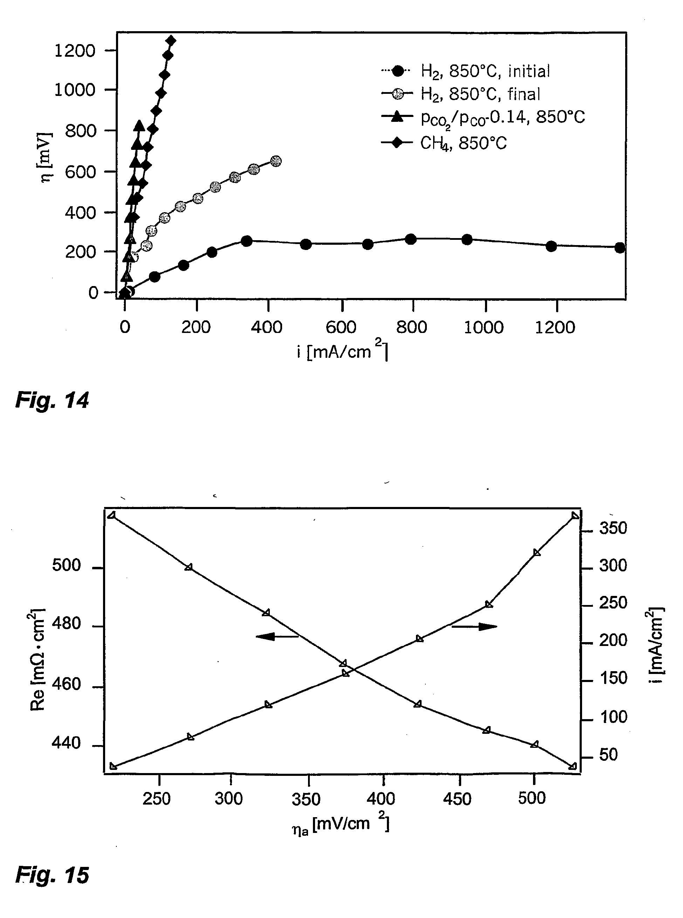

Also, upon current withdrawal, the impedance showed an activated process, as the total Rp dropped by a factor of 2 between OCV and 400 mV in humidified $H_2$ (Figure 13). This correlates well with the overpotential-current evolution (Figure 14) where a net activation process is observed upon polarisation. The impedance responses were best fitted by a three arcs LRe(R1Y1)(R2Y2)(R3Y3) circuit, using the Zahner fitting software. Yi is a constant phase element (CPE)[36]

$$Y_i = Y_{i,o}(j\omega)^n \qquad (4)$$

with $Y_{i,o}$ an admittance factor, j the imaginary unit, $\omega$ the angular frequency ($2\pi f$, f being the frequency), n the frequency power, Re the series electrolyte resistance between the reference electrode and the working electrode, Ri a resistance, and L the current/potential collectors inductance. One physical interpretation of $Y_{i,o}$ is as a distributed capacitance, as when n=1, this value turns to be a capacitance, C. The inductance was added in this manner after trials made with ceramic resistors and capacitors, which were best interpreted by taking into account the current and potential leads, which are primarily responsible of L. L was constant, with some variation measurements. This simple equivalent circuit was chosen as no knowledge of the reaction mechanism was available. This approach condenses however the data and allows for their interpretation. The general values for $n_1$, $n_2$, $n_3$ and L were 0.76-0.9, 0.8-1, 0.85-0.9, and 643 nH, and the mean fitting error was of 0.1-0.4 %, whereas the maximum error was of 1-4 %.

When the anode was polarised, the series ohmic resistance tended to decrease (Figure 15). Between OCV and 400 mV, the current density rose to about 350 mV/cm[2], and the Re was lowered by about 15 %. This might be due to the increase of the anodic oxygen potential which would lead to an increase of the overall electronic conductivity of the electrode, as the electronic conductivity of the lanthanum chromites is of the p-type. For the LSrCMg, the conductivity in air was of $\approx$15 S/cm whereas it dropped to only 1.3 S/cm in humidified hydrogen (Table 2).

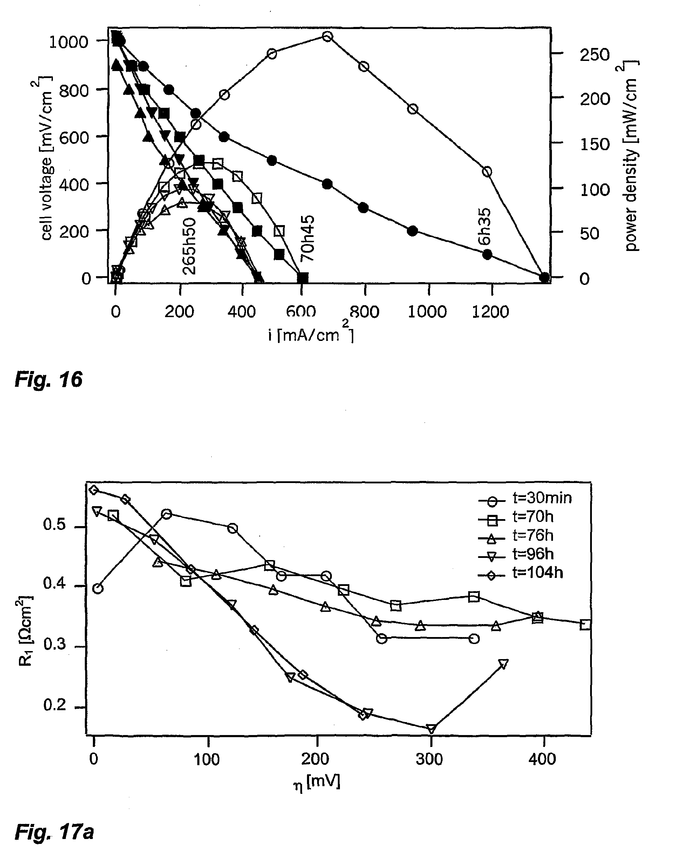

The evolution of $R_1$-$C_1$, $R_2$-$C_2$ and $R_3$-$C_3$ with the anodic overpotential is shown in Figure 16. $R_1$ and $R_2$ decreased while $R_3$ increased with the overpotential. $C_1$, $C_2$ and $C_3$ also decreased with the polarisation. Average summit frequencies, given as

$$f_i[Hz] = \frac{1}{2\pi R_i C_i}, \qquad (5)$$

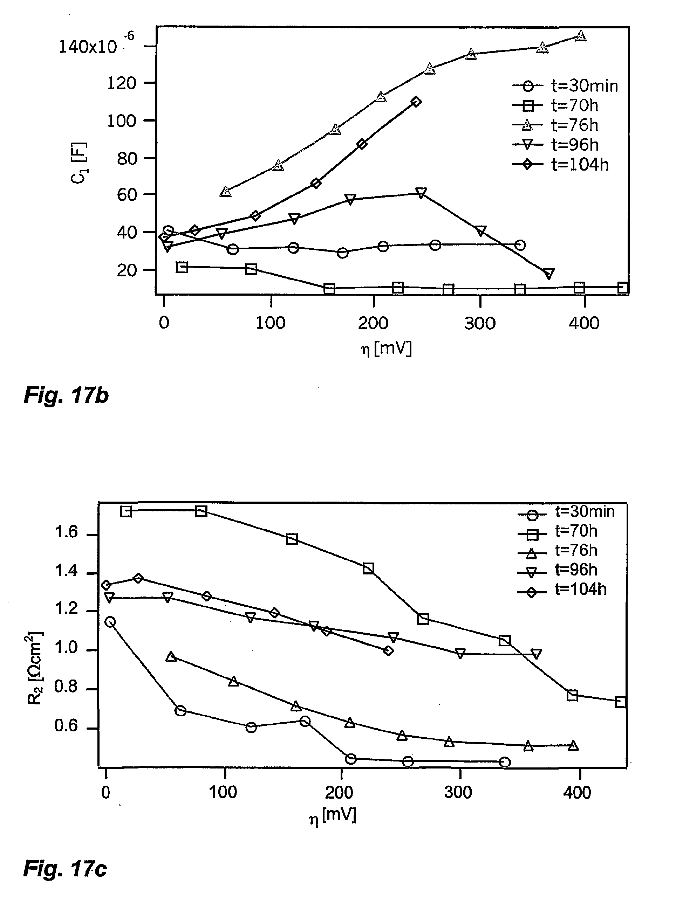

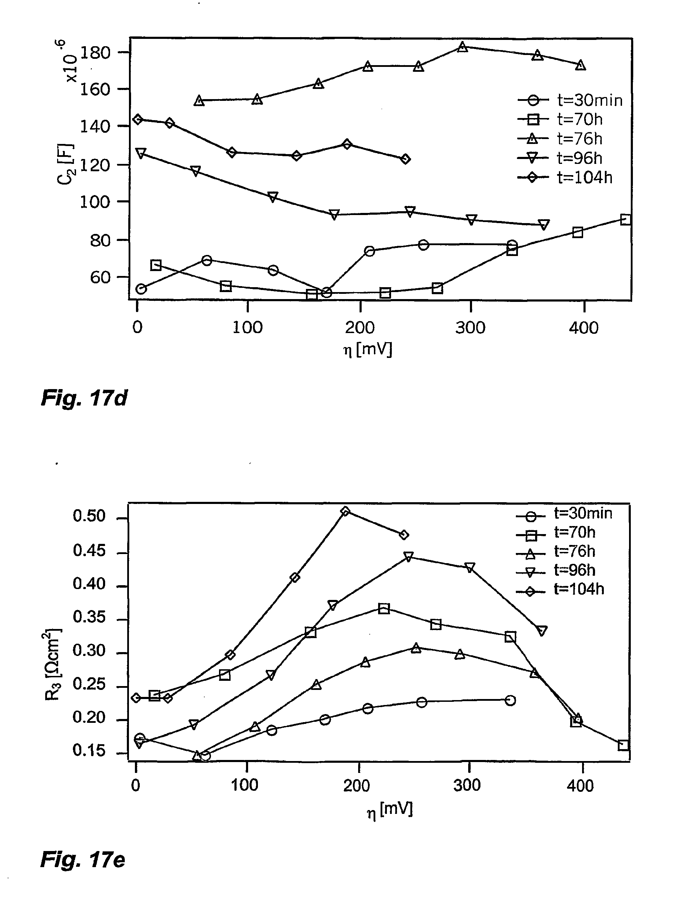

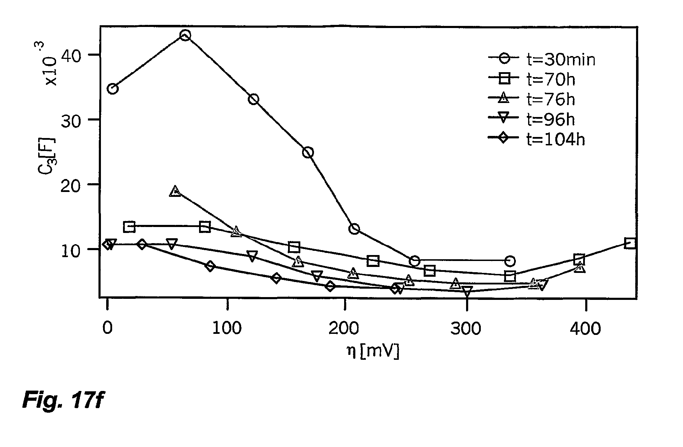

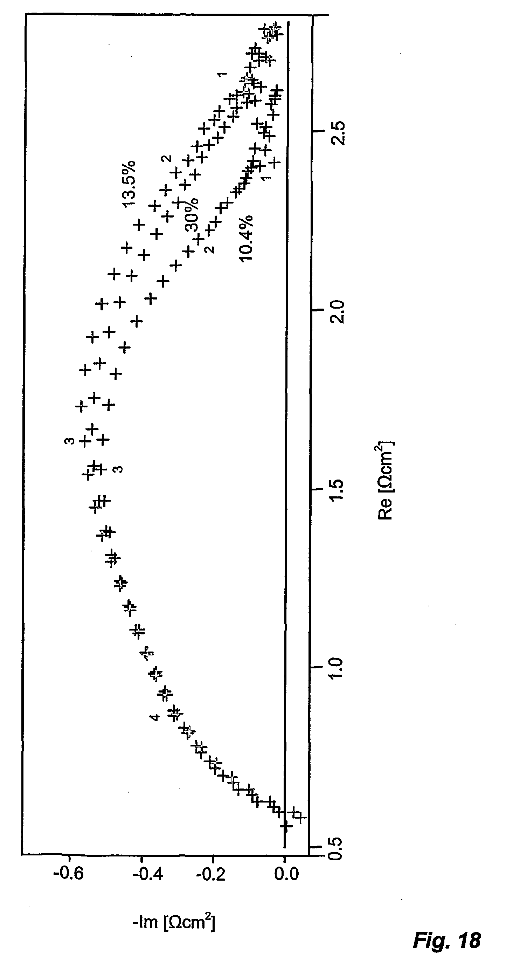

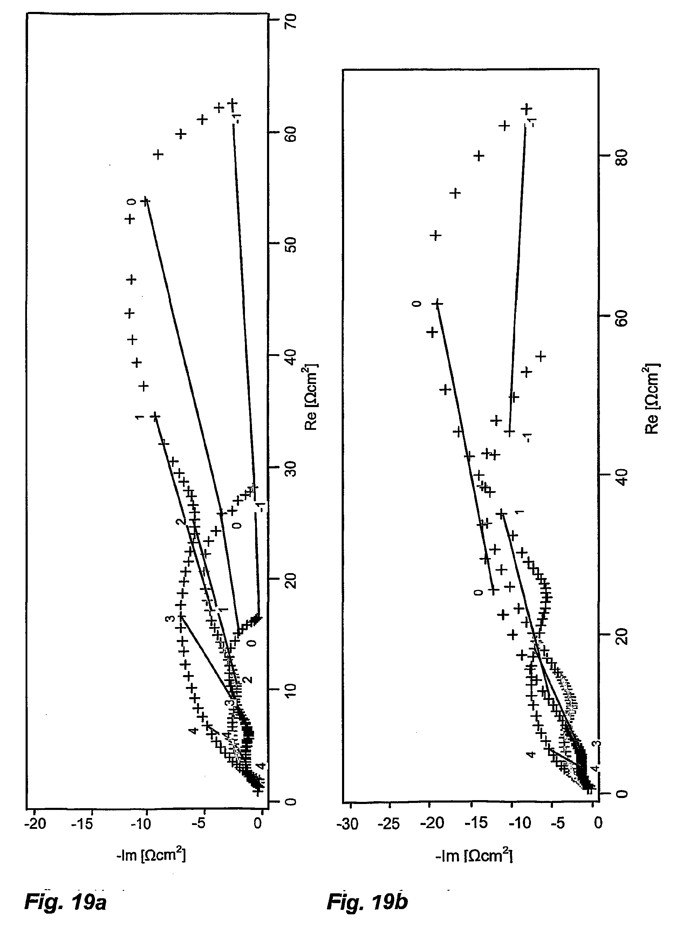

were of 10 kHz, 4 kHz and 23 Hz for the first, second and third arc respectively. Upon aging, all the R values increased, as well as $C_1$ and $C_2$, $C_3$ being almost unchanged (Figure 17). This is due as previously discussed to the absence of the adhesive composite layer. The power output was observed consequently to decrease (Figure 16). Eventually, the degradation ceased and a stable value was reached (Figure 16). The evolution of $R_3$ and $C_3$ with the $H_2O$ partial pressure (Figure 18), $R_3$ decreasing and $C_3$ slightly increasing, could be a hint of a gas conversion impedance[37]. Moreover, this fact was confirmed by the absence of this third arc when a symmetrical cell configuration was used (see Figure 19).

**Effect of $H_2$, $CH_4$, $H_2O$, $CO/CO_2$ on LC polarisation**

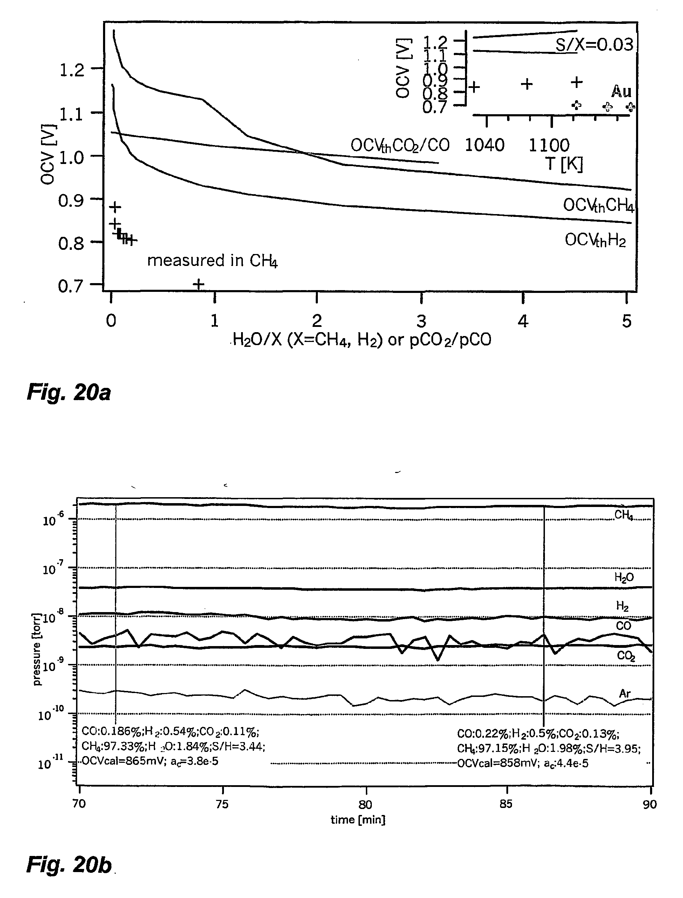

The theoretical OCVs in the gas phase versus air were calculated using the HSC-4.1 gas phase thermodynamic equilibria calculation software. In $H_2$ + 3 % $H_2O$ an estimate of -1139 mV at 850°C and -1035 mV at 900°C were obtained, while in $CH_4$ + 3% $H_2O$ the values rose to -1260 mV at 850°C and -1290 mV at 900°C. The experimental OCV in hydrogen was typically of -1000~-1030 mV (see for example Figure 5 and 7), an acceptable value in view of the open configuration of the testing set-up. In methane, the value was quite high, around -1200 mV (see for example Figure 5 and 7). These values were typical for all tests made in the unsealed configuration. The OCV in $CH_4$ was however higher than the expected OCVs calculated from previous catalytic measurements[31]. Measurements done in the sealed configuration with LCaCMg and LSrCMg electrodes gave on the contrary OCVs matching well these predicted values in $CH_4$[31]. The measured OCV for LSrCMg was of 862 mV (Figure 20), matching well the previous estimate of 880 mV, based on the catalytic study. The low potential is not due to air leakage to the anode chamber, as the OCV in wet hydrogen was of -1089 mV, a value which did not change after contacting the anode with $CH_4$ (i.e., the process is reversible). Also, in this configuration, OCV measurements made as a function of the steam to carbon ration (S/C) (Figure 20a) and MS gas analysis of the anode gas exhaust (Figure 20b) in the case of LSrCMg indicated that the oxygen partial pressure was determined primarily by the $PH_2O/PH_2$ equilibrium from the $H_2 + 1/2\,O_2 = H_2O$ reaction. The S/H ration was of 3.4~3.9, while the ratio of $CO_2/CO$ was of 0.6.

By considering the following reactions

$$CH_4 \rightarrow C + 2H_2.\ \text{irreversible} \qquad (6)$$

and

$$H_2O = H_2 + O^- \qquad (7)$$

$$C + O^- = CO \qquad (8)$$

$$C + H_2O = CO + H_2, \qquad (9)$$

and

$$CO + H_2O = CO_2 + H_2; \text{ gas shift reaction} \qquad (10)$$

$$C + 2H_2O = CO_2 + 2H_2; \text{ Kp}(850°C) = 12.94 \qquad (11)$$

where equation (7) and (8) can be considered the contraction of

$$1/2 O_2 + 2e^- = O^{--} \qquad (12)$$

with

$$H_2O = H_2 + 1/2 O_2 \qquad (13)$$

or

$$C + 1/2 O_2 = CO \qquad (14)$$

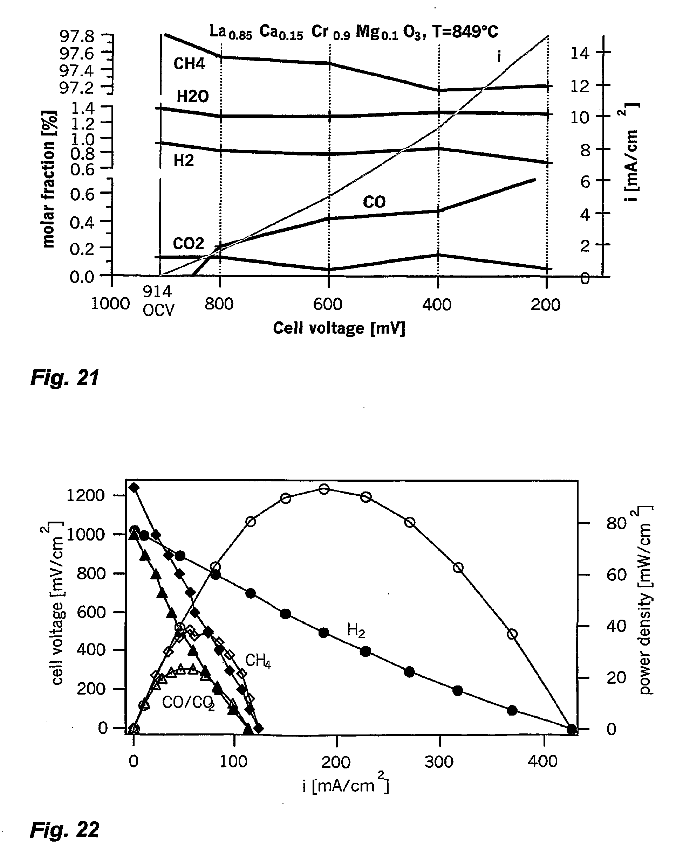

and considering $CH_4$ as an inert gas (e.g. Ar) then using the measured exhaust gas composition ($H_2$, $H_2O$, CO and $CO_2$), the HSC-4.1 gave an OCV between 858 and 865 mV (Figure 20), also in agreement with the other values. From these calculations, the carbon activity was estimated to ~10-5, indicating no carbon deposition. Also, the estimated $CH_4$ conversion was of 0.3 % in good agreement with the catalytic steam-reforming tests (0.22 %). LCaCMg anodes performed equivalently (Figure 21). The situation was similar for Au anodes (inset Figure 20a), where an OCV of ≈ 700 mV was slowly attained in humidified $CH_4$. Non-ideal electromotive forces were also observed in literature on Au electrodes deposited over zirconia for sensors with hydrocarbon gases and $O_2$[38,39]. This mixed potential that developed, being dependent on kinetic factors, is expected to be a strong function of the electrode material. Thus, the discrepancy between the expected and actual OCV in the open set-up could be related to some methane pyrolysis over the metallic flange, rather than coking over the LC perovskites as no carbon build up was observed by temperature programmed analysis (TPO) in catalytic runs in humidified $CH_4$ over the same catalysts[31]. Dry hydrogen is then expected to reach the anodes after the pyrolysis. Nevertheless, all test made in methane gave the same OCVs, independently of the anode composition, so that this effect is not expected to have any effect when comparing the different substitutents.

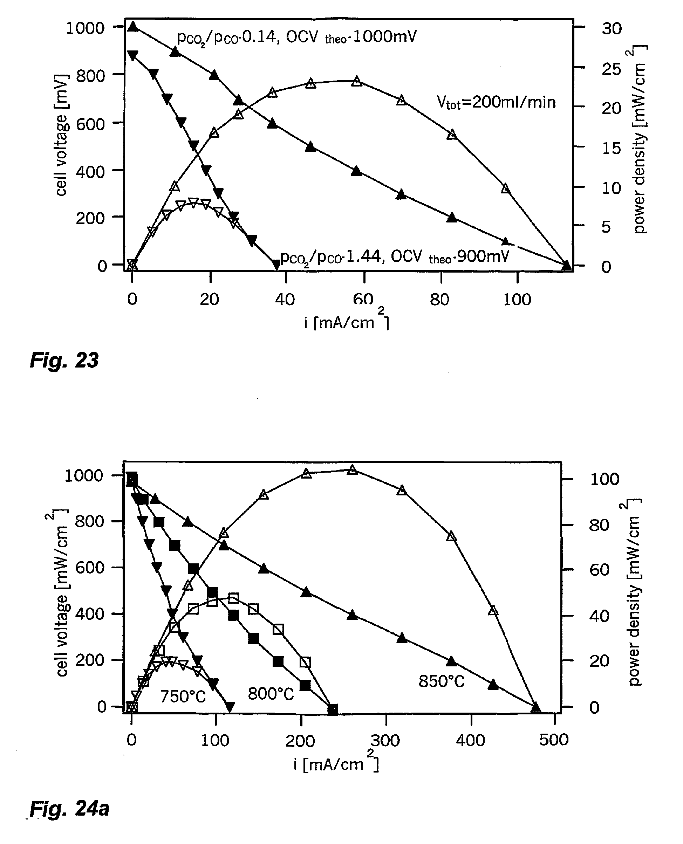

The performance of LC anodes in humidified $H_2$, $CH_4$ and dry $CO/CO_2$ fuels is depicted in Figures 14 and 22, in the case of the LSrCMg system. The power output increases and the overpotential decreases in the order of CO-$CH_4$-$H_2$. The Rp changed at 850°C from 9.2 to 6.1 to 1.7 $\Omega cm_2$ from CO to $CH_4$ to $H_2$. This indicates that the electrochemical oxidation rate of $H_2$ was higher than for $CH_4$ which was in turn higher than for CO. Increasing the $CO_2/CO$ ratio reduced further more the cell performance (Figure 23), with the Rp increasing to 17.2 $\Omega cm^2$ - the OCV passed from 1003 to 882 mV, as expected. This could eventually indicate some inhibiting effect of $CO_2$, as observed earlier[31]. The inhibition could be related to the surface segregation of Ca or Sr on these materials, as these elements are basic sites capable of interacting with $CO_2$ to form carbonates. The latter, could block the catalytically active sites for oxidation. Such inhibition was reported on $La_2O_3$ catalysts[40] and interpreted as the interaction of $CO_2$ with active oxide species responsible for methane and oxygen activation. Moreover, $CO_2$ reforming was observed to be quite low with the basic LC compounds[31].

The impedance spectra obtained for humidified $H_2$ and $CH_4$ have similar appearances, as shown for the case of a symmetrical LSrCMg cell in Figure 19. In this case two arcs were observed with summit frequencies of about 4.5 kHz and 45 Hz in $H_2$ and 4 kHz and 18 Hz in $CH_4$ at 850°C. These frequencies are somewhat lower in methane. The second arc seemed the most sensitive to the gas atmosphere, as $R_1$ and $C_1$ were similar in both humidified $H_2$ and $CH_4$, while $R_2$ was about 5.6 times higher in $CH_4$ (2.5 $\Omega cm^2$ in $H_2$ and 14$\Omega cm^2$ in $CH_4$) respectively, while $C_2$ was 2.6 time less in $CH_4$, 702 $\mu$F in H2 and 275 $\mu$F in $CH_4$. Water was previously observed to have almost no effect on the catalytic activity of LSrCMg and LCaCMg. In the electrochemical experiment of Figure 20, water modified the OCV values as the $H_2O/H_2$ ratio was changed at higher humidity values. Also, the higher the working temperature, the better the cell performance, with a temperature limit of about 850°C, below which the performance is poor, in both $H_2$ and $CH_4$ (Figure

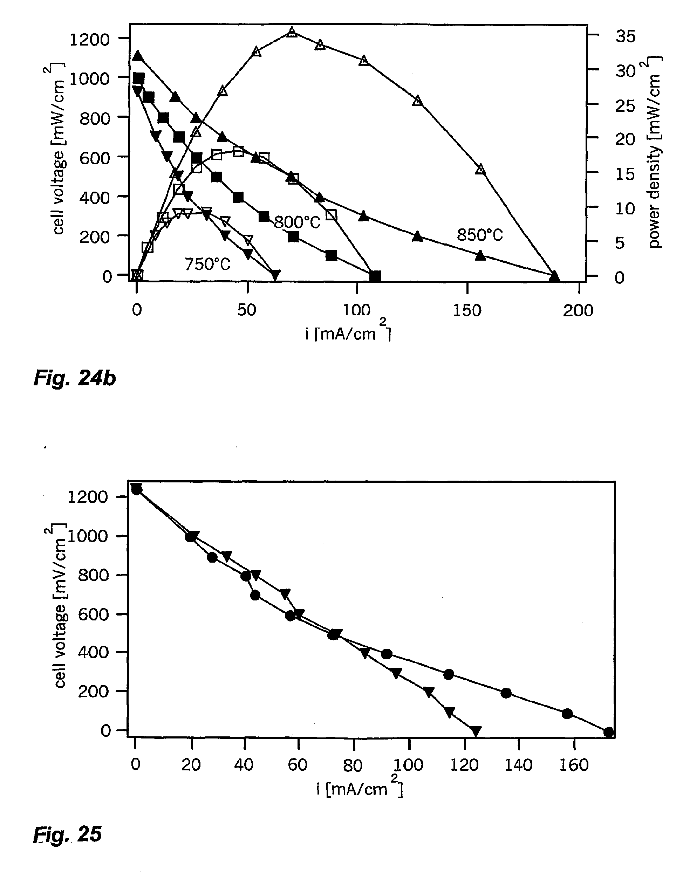

24). The effect of water on the polarisation losses were almost negligible (see Figure 18 for $H_2$ and 25 for $CH_4$). In methane, the effect of water was only observed at high current densities (Figure 25). This goes in parallel with the previous report[31] of the poor steam reforming ability of the basic LC oxides in catalytic mode.

**Effect of the substituent on the performance of LC anodes**

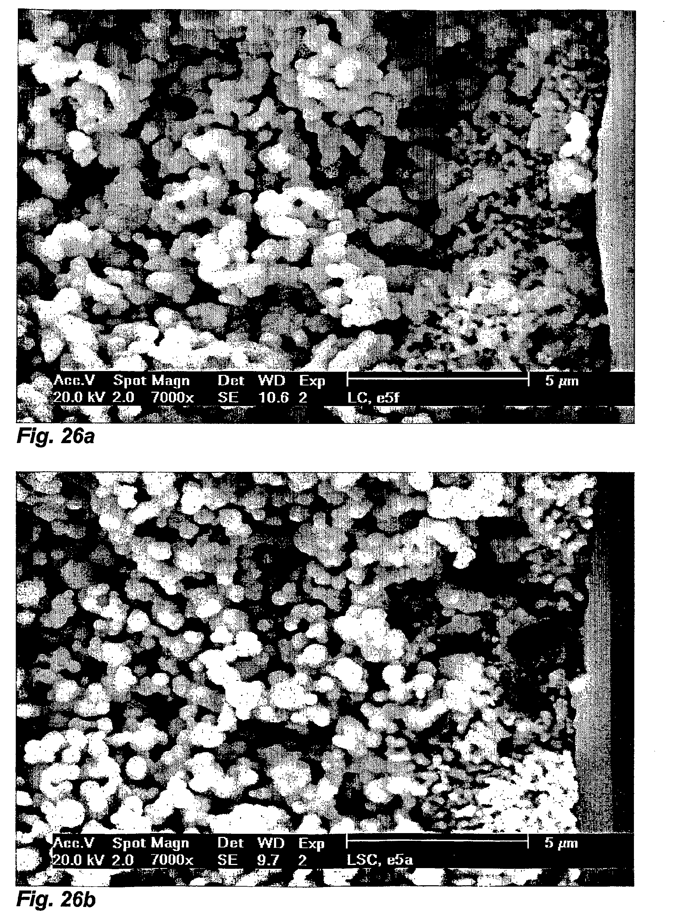

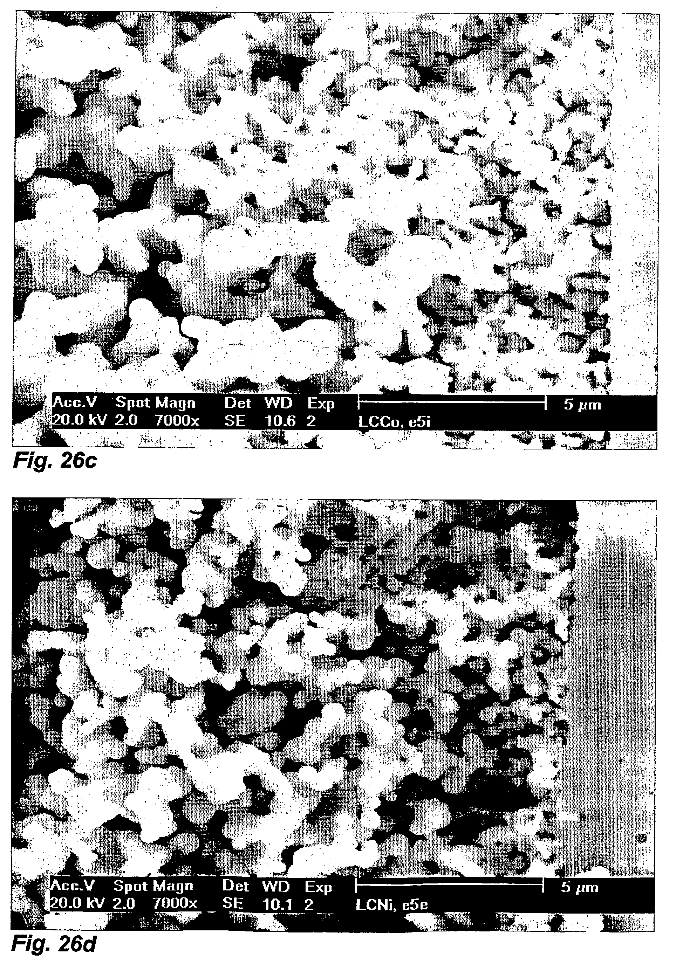

4 different lanthanum chromite anodes were considered for the analysis of the substitution effect: $LaCrO_3$ as base material, $La_{0.85}Sr_{0.15}CrO_3$, $LaCr_{0.9}Co_nO_3$ and $LaCr_{0.9}Ni_{0.1}O_3$. These electrodes were made of 1 composite $\approx 56:44$ LC:YSZ layer, and 3 layers of the LC, and were sintered at the optimal temperature of 1100°C. As discussed before, this structure allowed a higher stability and a better adhesion of the electrode. The composite layer thickness was estimated by SEM-EDAX analysis to 5 $\mu$m in all cases. The electrodes morphology observed were quite similar, showing the fine composite layer, and the coarser LC layer (Figure 26). The electrode grains followed roughly the initial particle size distribution of the starting LC powders, i.e., d50 of 0.8 $\mu$m, 1.0 $\mu$m, 2.1 $\mu$m and 2.1 $\mu$m for $LaCrO_3$, $La_{0.85}Sr_{0.15}CrO_3$, $LaCr_{0.9}CO_{0.1}O_3$ and $LaCr_{0.9}Ni_{0.1}O_3$. All these electrodes stuck quite well on the YSZ electrolyte substrate, even after electrochemical testing. These tests were made in the unsealed configuration set-up.

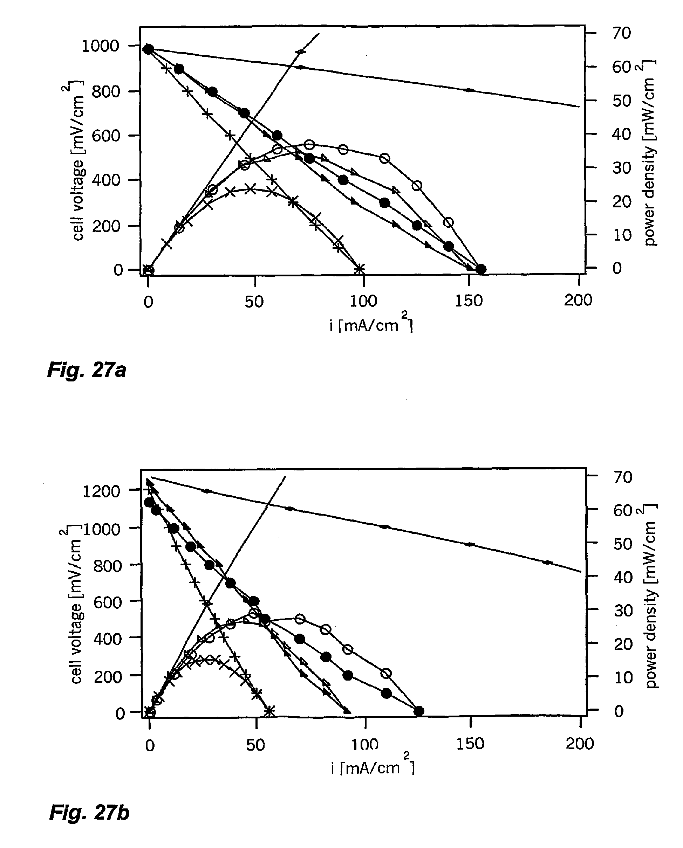

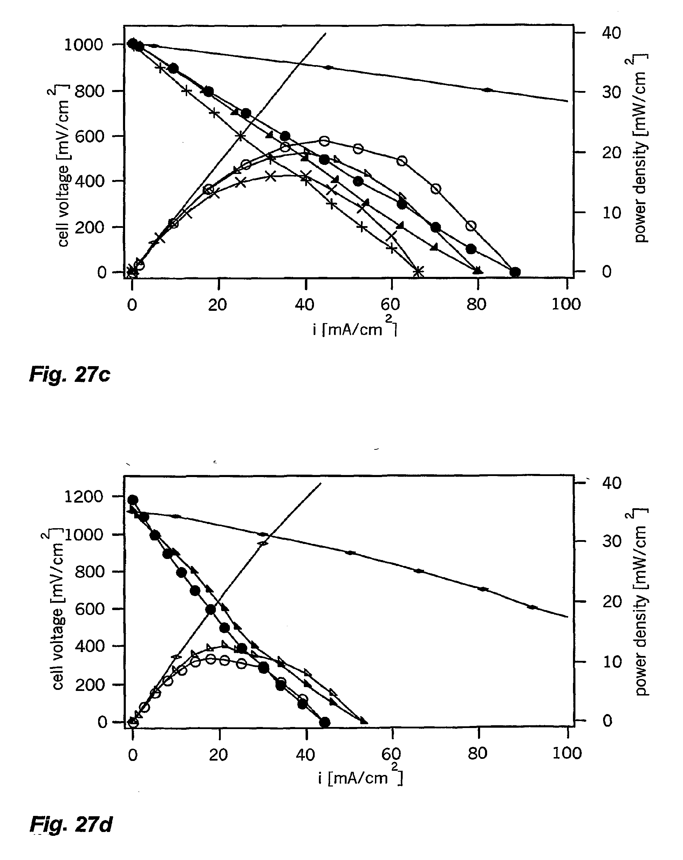

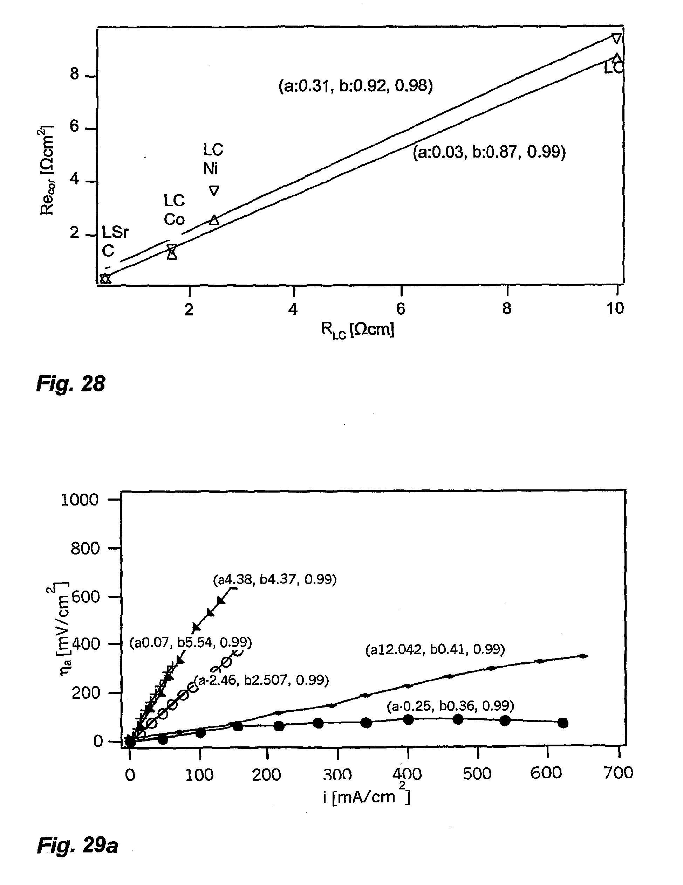

The potential-current and power curves were affected by the substituent in $LaCrO_3$ (Figure 27). Globally, upon Sr, Co or Ni substitution, the $LaCrO_3$ base material activity increased both in humidified hydrogen and methane. The Re and Rp were lowered significantly in the trend LC>LCCo>LCNi>LSrC. The Re was lowered by a factor of 19 at 840°C and 17.6 at 900°C in humidified $H_2$, and 11.8 at 840°C and 22 at 900°C in humidified $CH_4$ (Table 2). For the Rp, the factor was of 13 at 840°C and 11 at 900°C in humidified $H_2$, and 9.6 at 840°C and 6.2 at 900°C in humidified $CH_4$ from LC to LSrC (Table 2). The evolution of the Re, corrected from the expected ohmic loss of half of a 150 $\mu$m thick Kerafol 8YSZ electrolyte, as a function of the electric conductivity of the different LCs, was linear in both temperature ranges (Figure 28). The similar trend was observed with the Rp. The higher the electronic conductivity, the lower the Rp. This indicates clearly that the electronic conductivity has an influence on the global performance of these anodes.

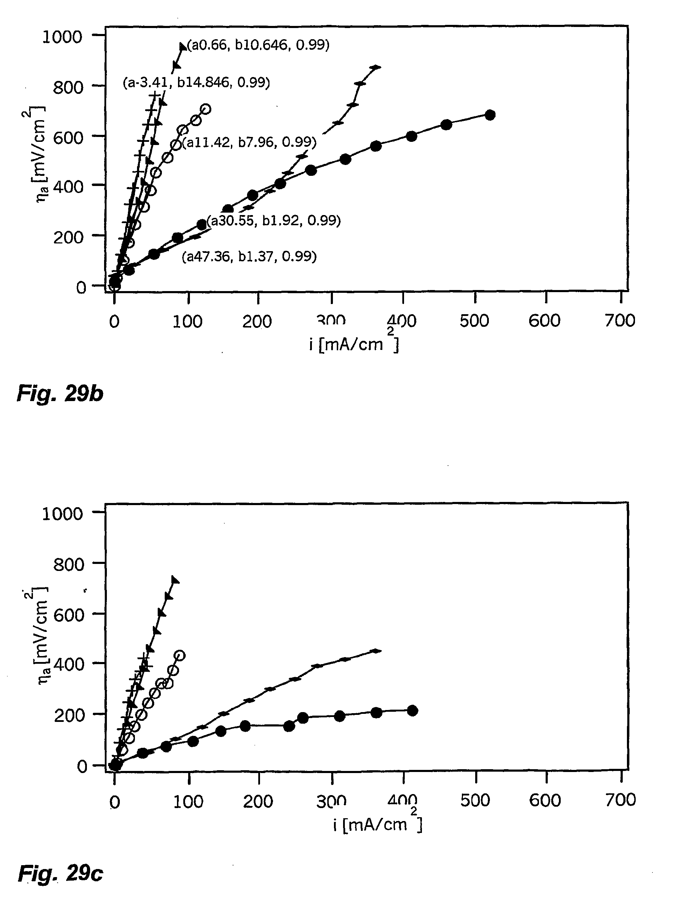

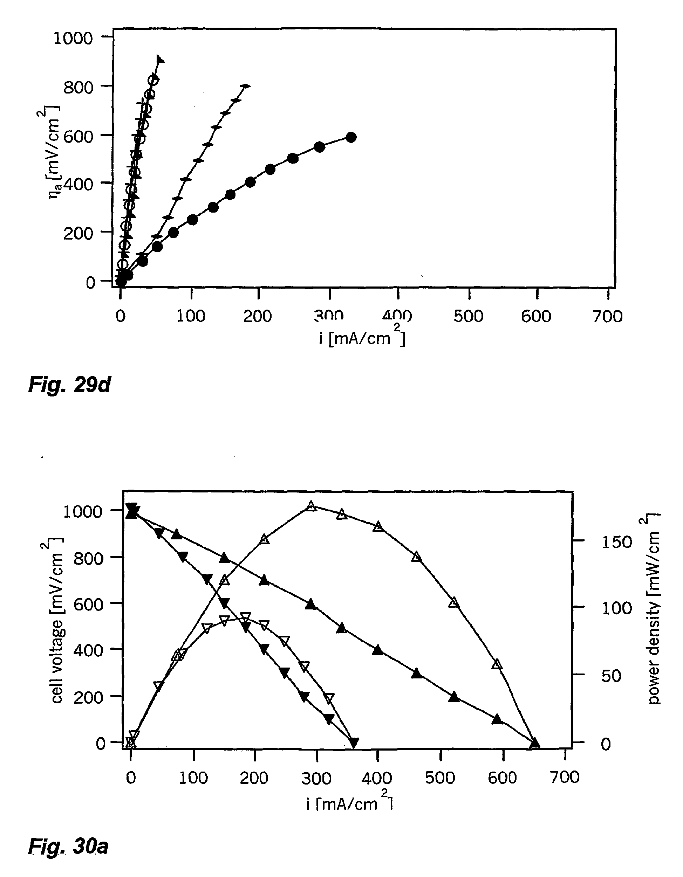

The substitution effect on the $LaCrO_3$ electrode performance is better depicted by the overpotential curves in Figure 29. The overpotential losses trend was LC≈LCCo>LCNi>LSrC>LSrCNi in humidified $H_2$ at 840°C and 900°C and humidified $CH_4$ at 840°C, and LC>LCCo>LCNi>>LSrC>LSrCNi in $CH_4$ at 900°C. The overpotential losses of LC and LCCo laid very near together even though the electronic conductivity of LCCo was 6 times higher than for LC. This indicates that the substituent plays also an important role in the electrocatalytic activity. Previously, the catalytic activity of these different oxides were assessed in methane rich gas mixtures (5:1 $CH_4$:O2, 5:1:0.6 $CH_4$:$O_2$:$CO_2$ and 56:x:y $CH_4$:Ar:$H_2O$ (x+y=44)) 31. It was observed that the activity, expressed as a turn-over frequency (TOF), followed the order of LC≈LCCo<LSrC<LCNi<LSrCNi at 850°C in wet $CH_4$. A direct relationship between the electronic and catalytic activity and the electrocatalytic performance is thus evidenced here.

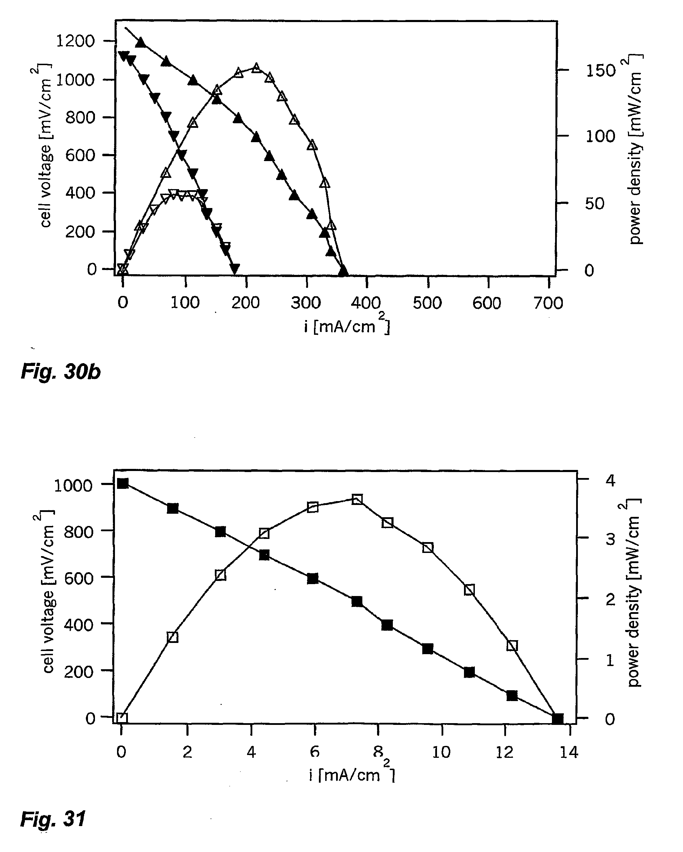

Ni substitution is further observed to enhance the performance of the cell in methane. By addition ofNi on the Cr site, the LSrC performance in $CH_4$ increased markedly (compare Figure 7 and 30). Whereas the short circuit current was of 650 mA/cm$^2$ in humidified $H_2$ and 350 mA/cm$^2$ in humidified $CH_4$ over a LSrC anode, it was of 620 mA/cm$^2$ in $H_2$ whereas of 520 mA/cm$^2$ in $CH_4$ over LSrCNi at 900°C. Methane is thus better activated over the Ni substituted compounds. In this case, the power outputs were similar in hydrogen and methane.

A trial has been made to further increase the activity of LSrCNi anode by adding one more layer made of $LaCr_{0.5}Ni_{0.5}O_3$. No effect of this layer was observed in hydrogen nor methane (Table 2).

Also, the difference between A-site substituents, Ca and Sr, lies in the difference in Rp, with a lower value for Sr substitution (2.3 $\Omega$cm$^2$ for Ca versus 1.7 $\Omega$cm$^2$ for Ca, Table 2). Beside that, thermodynamic calculations showed the higher stability of the Sr versus Ca-substituted LC and the increasing solubility of Sr in reducing atmospheres[31]. However, the sintering process of Ca versus Sr incorporated in LC is known to be more favourable due to the lower melting temperature of $CaCrO_4$ or the like (1000-1020-1120°C 12, 41) than for $SrCrO_4$ (1253°C 12, 42). If secondary phases are left behind during the powder preparation and the anode sintering, these phases would then react readily with YSZ to form $SrZrO_3$[31]. B-site substituted LC are expected to be more stable, as their demixing seemed to be hindered kinetically[32,43].

**Effect of the composite layer composition on the performance of LC anodes**

44 % YSZ composite anodes showed by electrochemical analysis to be more stable over time than the ones without YSZ (0 %) as exposed in the case of LSrCNi (compare Figure 5-6 and 7-8). This was also observed for the LSrC anodes. However, the initial performance of these LSrC and LSrCNi anodes were higher in the non-composite form. Indeed, lower $R_p$ and $R_e$ were observed (Table 2), giving rise to a higher power output. These values degraded however very rapidly by a factor of 2.25 and 1.2 respectively. This loss in performance was predominantly due to delamination. Further, LC lacking A-site substitution (Ca or Sr) were very sensitive to delamination and their power output was hence reduced (e.g., Figure 31 for LCMg).

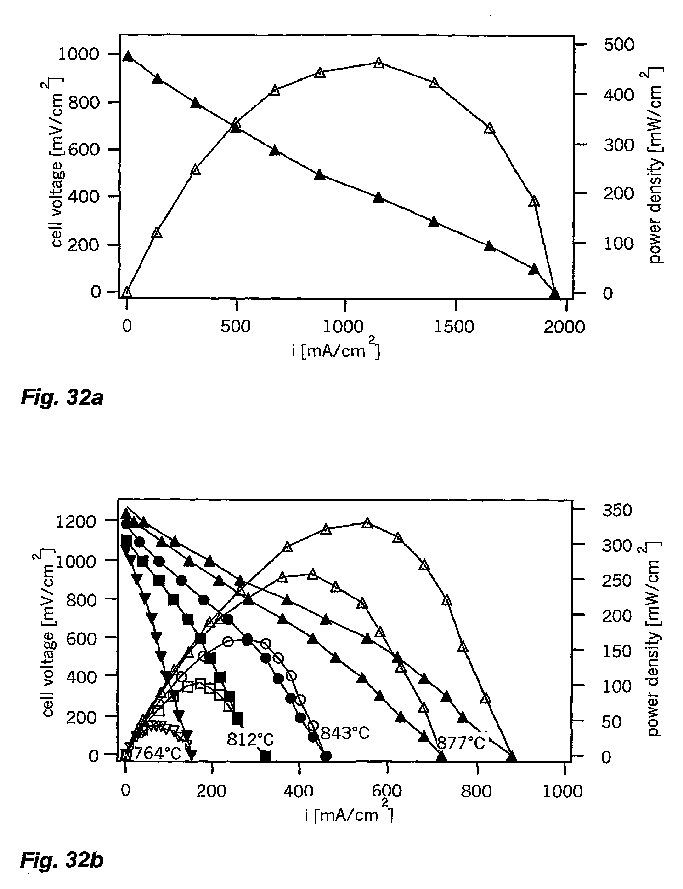

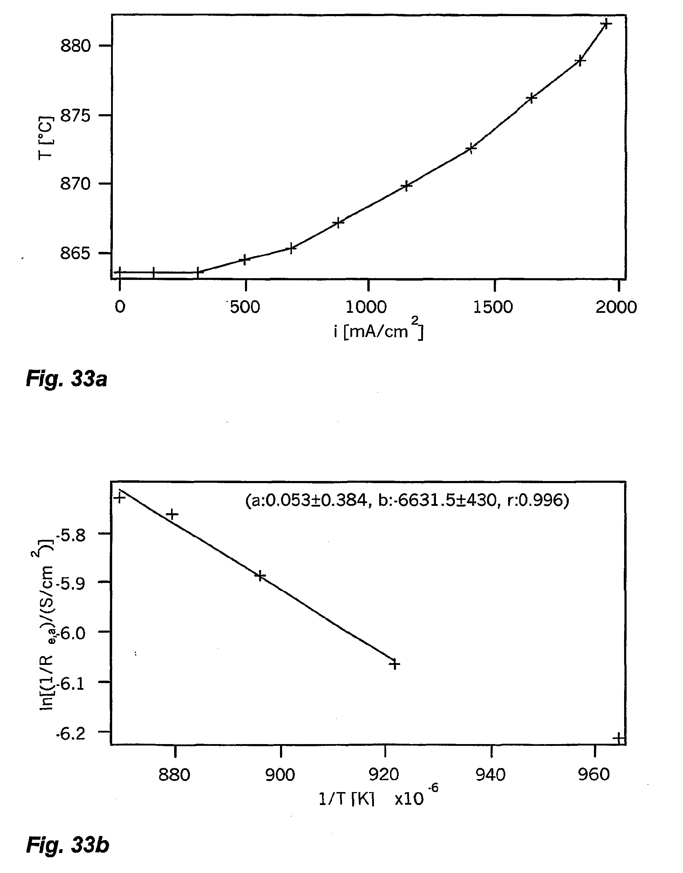

The two extremes used in the composite anodes were 0 % YSZ and 44 % YSZ. A 22 % YSZ composite anode, the lower limit allowed for a percolating structure[44], was also investigated in the case of the LSrCNi anode. Figure 32 shows the potential-current and the power output of the cell in humidified $H_2$ or $CH_4$ at different temperatures. The short circuit current and the power output were increased by a factor of 1.43 in $CH_4$, and by 4.44 in $H_2$ at 840°C, when compared with the 44 % YSZ composite anode. As a result of a high current density, the passage of current induced a local increase of the anode temperature (Figure 33a) as measured by the thermocouple placed beneath the electrode (see Figure 2).

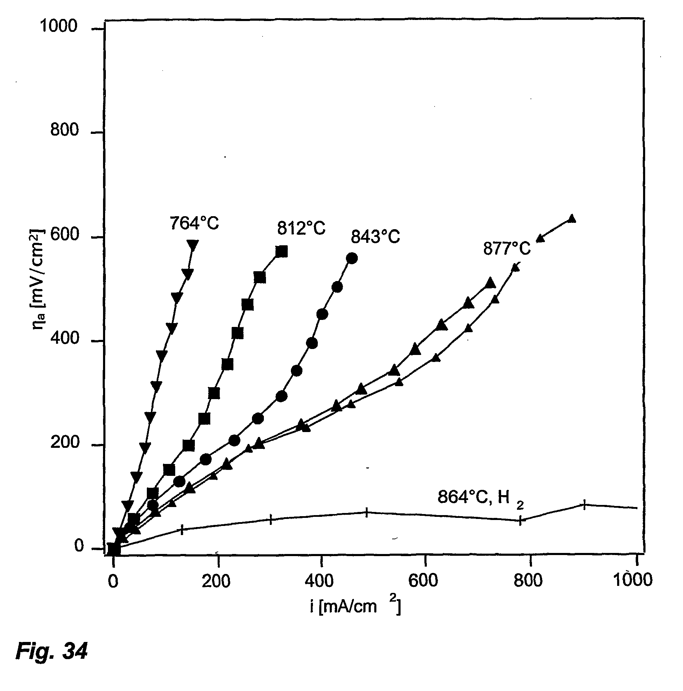

In this system, the ohmic resistances are lowered significantly, by a factor of 3. However theses losses are still higher than the expected losses for a 150 $\mu$m 8YSZ Kerafol (e.g., 0.38 $\Omega$cm$^2$ at 850°C). The temperature dependence of these losses is given in Figure 33b. An activation energy of 55$\pm$5 kJ/mol was measured, a value lower than the expected 77 kJ/mol for 8YSZ Kerafol plates, showing still the effect of the electrode conductivity on $R_e$. On the other hand, the anode overpotentials were significantly lowered (Figure 34) compared to the 0 % and 44 YSZ extremes (Figures 6 and 8). This cell configuration sustained $CH_4$ at 877°C for 136 h, almost without degradation (a small degradation was observed in the first 24 h). The addition of 22 %YSZ appears to favour the performance of the anode.

**Effect of the anode thickness on the overall performance**

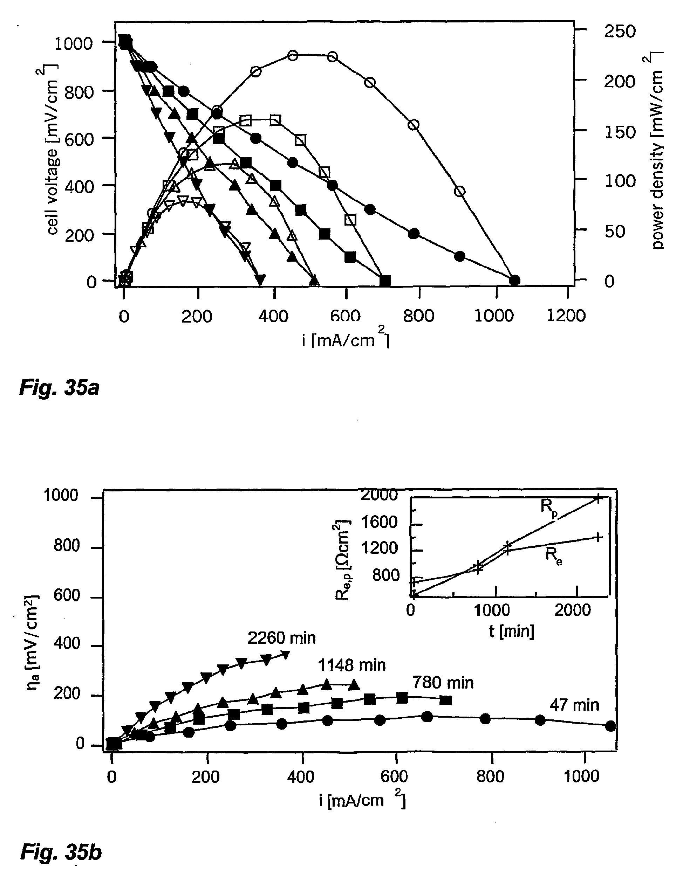

The anode thickness deposited above the composite electrode was reduced from 3 to 1 layer. The anode performance showed to increase as exposed in Figure 35 when compared to the case of 3 layers (Figure 7). However, the long term stability was poor. The time degradation of $R_e$ was lower than that of $R_p$, indicating that a small degradation of $R_e$ modifies $R_p$ drastically.

**Nature of the electrode reaction**

The sintering temperature and the incorporated elements were shown to have an effect on the anodic electrolyte resistance. An optimum temperature of 1100°C was necessary to stick efficiently the electrode on the YSZ electrolyte and to prevent the formation of a topotactic reaction leading to $SrZrO_3$. Sintering at a lower temperature lead to the delamination of the electrode. A better stability was further obtained by adding an adhesion layer in between the LC anode and YSZ. The series resistance was thus observed to be very sensitive to the nature of the interface (about 1 $\Omega$cm$^2$ for the 0 % and 44 % YSZ composite adhesive layer and 0.32 $\Omega$cm$^2$ for the 22 % YSZ composite adhesive layer (see Table 2)). An additional ohmic loss was also stemming from the low conductivities of these perovskites From the measured electronic conductivity in reducing conditions a 200 m$\Omega$cm$^2$, 25 m$\Omega$cm$^2$, 16 m$\Omega$cm$^2$ and 11 m$\Omega$cm$^2$ losses are expected for dense LC, LCNi, LCCo and LSrC electrodes of 100 $\mu$m thickness and 1 cm$^2$ surface respectively. Due to the porosity of the working electrodes, an ohmic loss higher by a factor of at least 10 could be expected[45] (i.e. 2000, 250, 160 and 110 m$\Omega$cm$^2$).

Table 3: Summary of the $R_p$ activation energies.

| Anode composition | Cell Nr | Sintering temperature [°C] | $R_p$ $E_a$ [kJ/mol] $H_2$+3%$H_2O$ | $R_p$ $E_a$ [kJ/mol] $CH_4$+3%$H_2O$ | $E_a$ [kJ/mol] $\sigma_o$- | $E_a$ [kJ/mol] $\sigma_e$, air | $E_a$ [kJ/mol] $\sigma_e$, $H_2$ |
|---|---|---|---|---|---|---|---|
| $La_{0.85}Sr_{0.15}Cr_{0.9}Ni_{0.1}O_3$ | E2c | 1200 | 116 | | 87 | 9.7 | 32.3 |
| $La_{0.85}Sr_{0.15}Cr_{0.9}Ni_{0.1}O_3$ | E2d | 1100 | | | 87 | 9.7 | 32.3 |
| $La_{0.85}Sr_{0.15}Cr_{0.9}Ni_{0.1}O_3$ | E2f | 1050 | | 19 | 87 | 9.7 | 32.3 |
| $La_{0.85}Sr_{0.15}Cr_{0.9}Ni_{0.1}O_3$ | E7b | 1100 | 406? | | 87 | 9.7 | 32.3 |
| $La_{0.85}Sr_{0.15}Cr_{0.9}Ni_{0.1}O_3$ | E2b | 1200 | 87 | 56 | 87 | 9.7 | 32.3 |
| $La_{0.85}Sr_{0.15}Cr_{0.9}Ni_{0.1}O_3$ | E2e | 1100 | 186 | | 87 | 9.7 | 32.3 |
| $La_{0.85}Sr_{0.15}Cr_{0.9}Ni_{0.1}O_3$ | E2g | 1050 | 104 | | 87 | 9.7 | 32.3 |
| $La_{0.85}Sr_{0.15}Cr_{0.9}Ni_{0.1}O_3$ | E5h | 1100 | 49? | | 87 | 9.7 | 32.3 |
| $La_{0.85}Sr_{0.15}Cr_{0.9}Ni_{0.1}O_3$ | E7c | 1100 | | | 87 | 9.7 | 32.3 |
| $La_{0.85}Sr_{0.15}CrO_3$ | E5b | 1100 | | | 87 | 5.2 | 5.4 |
| $La_{0.85}Sr_{0.15}CrO_3$ | E5a | 1100 | 125 | 24 | 87 | 5.2 | 5.4 |
| $LaCrO_3$ | E5f | 1100 | 152 | 103 | 87 | 6.4 | 34.9 |
| $LaCr_{0.9}Co_{0.1}O_3$ | E5i | 1100 | 131 | 118 | 87 | 20.1 | 29.9 |
| $LaCr_{0.9}Ni_{0.1}O_3$ | E5e | 1100 | 79 | 177 | 87 | 7.3 | 16.6 |
| $La_{0.85}Sr_{0.15}Cr_{0.9}Mg_{0.1}O_3$ | E5d | 1100 | | | 87 | 6.6 | 6.5 |

The conductivity $E_a$ for LSrC and LSrCNi were taken to be those of LCaC and LCaCNi. $\sigma_o^{2}$- is taken from reference[46].

EP 1 405 361 B1

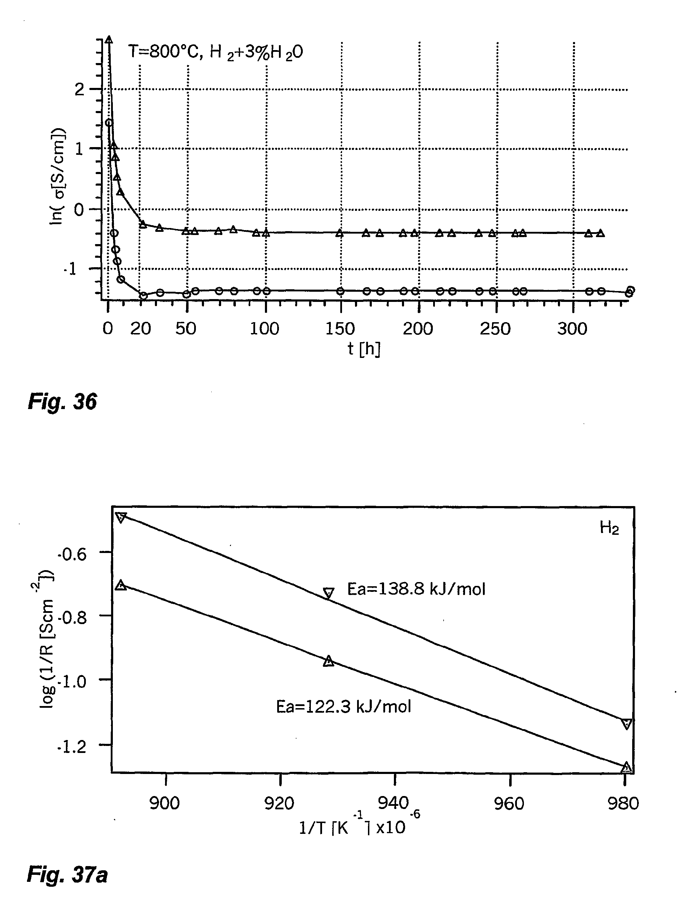

The effect of the substituent on the $R_p$ losses were also significant. This implies that the conductivity played also a role in the electrode reactions. This is in contradiction with the result of Primdahl et al. who argued that conductivity should not have any influence on their $La_{0.8}Sr_{0.2}Cr_{0.97}V_{0.03}O_3$ electrode [27]. Apparent activation energies for the different $R_p$s are summarised in Table 3. These values vary in general between 80 and 190 kJ/mol. As for the electronic conductivity, it had a higher activation energy in $H_2$ than in air, with values varying between 5 and 20 kJ/mol in air and 5 and 32 kJ/mol in wet $H_2$, whereas the ionic conductivity varied, in the case of $La_{1-x}Sr_xCr_{1-y}Ni_yO_3$, between 87 (x = 0.2, y = 0.05), 142 (x = 20, y = 0)[47] and 93[47] or 137[46] kJ/mol (x = 0.35, y = 0) and 77 kJ/mol for $La_{0.7}Ca_{0.3}CrO_3$ [47]. Correspondingly, the activation energy for the ionic leak current density, which takes into account the variation of the vacancy concentration between two different gas atmospheres, is between 130 and 195 kJ/mol[47]. Beside that, conductivity transient measurements made on thin rods of LCaCNi and LCaCMg at 800°C, upon a rapid change of the gas atmosphere from air to wet $H_2$ (using Ar), indicated a slow exponential decrease in the conductivity with time (Figure 36). The behaviour was reversible upon reoxidation giving rise to the same initial conductivity in air. A trial was made to analyse this behaviour using the concept of oxygen diffusion in the materials, taking into account the surface exchange and the diffusion coefficients. A rough estimation of the exchange coefficient, $\kappa$, taking a starting value for the vacancy diffusion coefficient of $D_{V_o..800°C}$ of $1.2 \times 10^{-6}$ cm$^2$/s [46,47] gave an approximate value of about $10^{-6}$ to $10^{-7}$ cm/s, which could indicate a surface limiting process for the reduction. Yasuda et al. [46] presented a coefficient $D_{V_o..850°C}$ of $2.9 \times 10^{-8}$ cm$^2$/s and $\kappa$ of $1 \times 10^{-4}$ cm/s using a similar technique. Taking the concept of Adler et al. [48,49] depicting the length $\delta$ of the reaction zone on the electrode,

$$\delta \approx \sqrt{\frac{(1-\varepsilon)}{\tau}\frac{L_c}{a}} \tag{15}$$

with

$$L_c = \frac{D^*}{\kappa} \tag{16}$$

and

$$D^* = fD_{V_o}\frac{c_v}{c_{mc}} \tag{17}$$

where $\varepsilon$ the porosity (taken as 0.3), a the surface area (taken as 10000 cm$^2$/cm$^3$), $\tau$ the solid phase tortuosity (taken as 1), D* the tracer diffusion coefficient, f the correlation factor (taken as unity[50]), $c_{mc}$ the concentration of oxygen sites in the mixed conductor determined from the lattice parameter ($1.9 \times 10^{-2}$ mol/cm$^3$ for the LCs), and $c_v$ the vacancy concentration (around $10^{-3}$ mol/cm$^3$ for the LCs), it could be possible to roughly estimate a reaction length of 2 to 4 $\mu$m inside the electrode structure. In air, the $\kappa$ is around $10^{-4}$cm/s. A more accurate evaluation of $D_{V_o}..$ and $\kappa$ could be obtained from more reliable data. Such a change in the exchange coefficient could explain the slow reduction process. This preliminary evaluation could also explain the slow degradation of the activity of the lanthanum chromites over a period of about 20 h observed during polarisation. Reoxidation of the material leads thus to a reversible activity. It also could give more insight on the mechanism of the reaction. It may be interesting to evaluate partial oxidation on the chromite ($CH_4 + O_2$), $O_2$ possibly hindering the extreme reduction of the electrode. This along with the activation energies and the correlation with the electrode conductivity might indicate a surface chemical process limitation related to the perovskite surface.

Also, by Adler et al. [48, 49], a chemical impedance $Z_{chem}$ was defined relating the $D_{V_o}..$ and $\kappa$, as

$$R_{chem}[\Omega.cm^2] = \left(\frac{RT}{2F^2}\right)\sqrt{\frac{\tau}{(1-\varepsilon)c_vD_v a\kappa c_{mc}}} \tag{18}$$

$$C_{chem}[F] = \frac{2F^2(1-\varepsilon)c_v\delta}{ART} \qquad (19)$$

$$Z_{chem} = R_{chem}\sqrt{\frac{1}{1 - jw(C_{chem}R_{chem})}} \qquad (20)$$

with

$$A = \frac{1}{2}\frac{\partial \ln(P_{O_2})}{\partial \ln(c_v)} \qquad \cdot (21)$$

By taking into account the values of $D_{v_o}$.. and $\kappa$ of Yasuda et al. [46] and our estimates for $\kappa$ in humidified $H_2$, as well as an estimate of A obtained from nonstoichiometry studies of $La_{0.9}Sr_{0.1}CrO_{3-\delta}$ [51], the difference in behaviour between an unpolarised and a polarised electrode could be interpreted as a local change in the activity of the electrode related to its reduction and thus to the decrease of the surface exchange coefficient. By polarising the electrode, a partial reoxidation will occur leading to the increase in the surface exchange coefficient. This will lead to a decrease in the impedance polarisation resistance, $R_p$. In Table 4, a trial was made to estimate and summarise this expected change.

Table 4: Effect of the $\kappa$ on a presumed chemical impedance

| Parameters | values | Calculated values | air | wet $H_2$ |
|---|---|---|---|---|
| $\tau$ | 1 | $\delta$ [$\mu$m] | 1.4 | 14.4 |
| $\varepsilon$ | 0.3 | $D^*$ [cm$^2$/s] | 2.96x10$^{-8}$ | 2.96x10$^{-8}$ |
| A | 647.5 | $C_{chem}$ [F/cm$^2$] | 3.10x10$^{-4}$ | 3.10x10$^{-3}$ |
| a [cm$^2$/cm$^3$] | 10000 | $R_{chem}$ [ cm$^2$] | 0.18 | 1.83 |
| $\kappa_{air}$ [cm/s] | 1x10$^{-4}$ | $f_{max}$ [Hz] | 2799 | 28 |
| $\kappa H_2$ [cm/s] | 1x10$^{-6}$ | | | |
| $D_{v_o}$.. [cm2/s] | 5.62x10$^{-7}$ | | | |

Values of references [46] and [51] were used and estimates for $\tau$ and $\varepsilon$ were taken from reference[48].

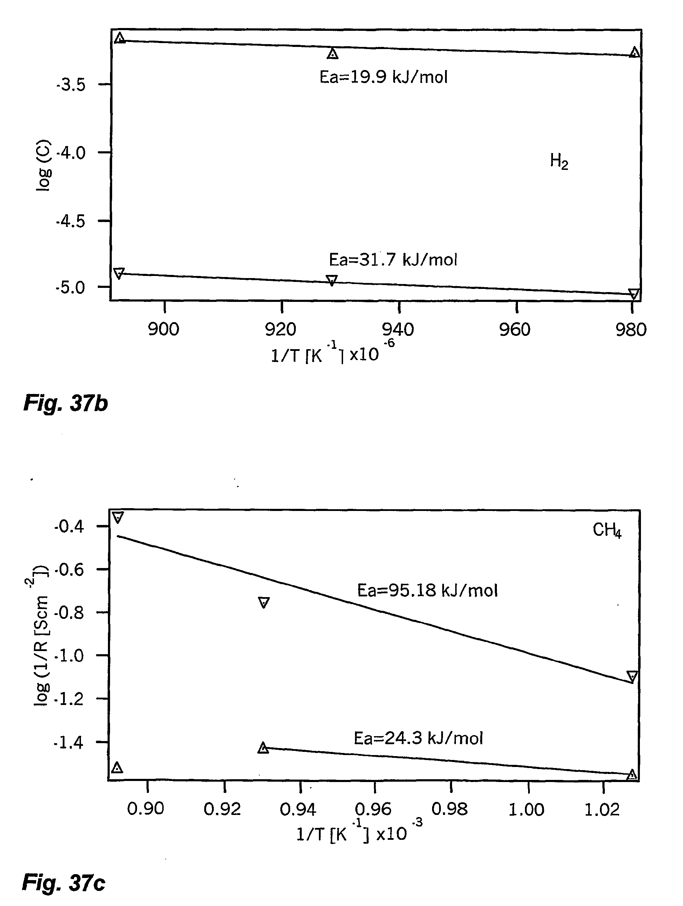

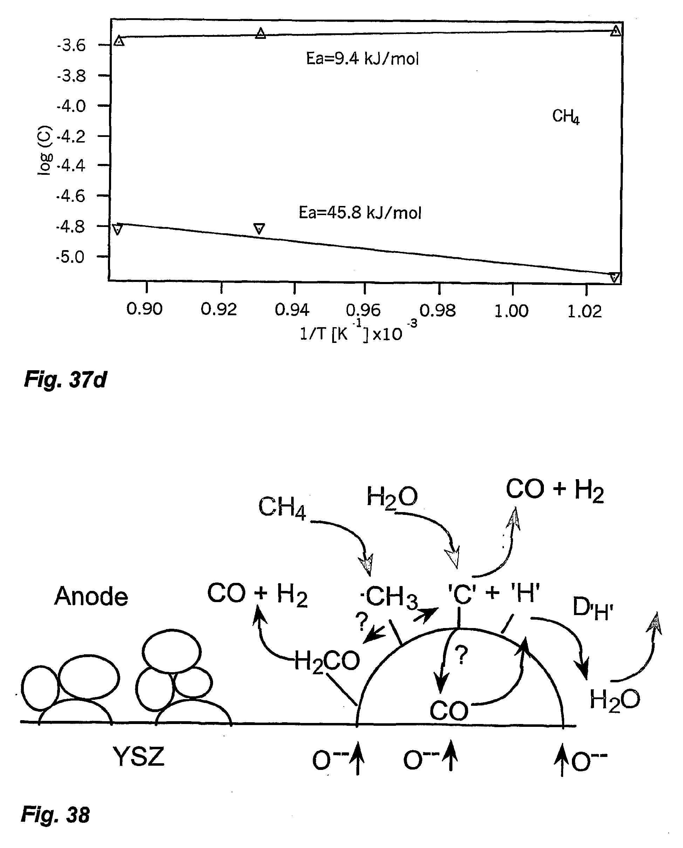

To apply this on our system, an example of an unpolarised electrode is taken from the symmetrical cell analysis (B24), where two processes were observed by impedance spectroscopy, with activation energies of 139 kJ/mol and 122 kJ/mol in humidified $H_2$, and 95 kJ/mol and 24 kJ/mol in humidified $CH_4$ for $R_1$ and $R_2$ respectively (Figure 37). The $C_1$ activation energy did not vary much with temperature and gases (Figure 37), with a value of about 10 $\mu$F/cm$^2$ (see also Figure 17). $C_2$ seemed to be less affected by the temperature with values of 630 to 250 $\mu$F/cm$^2$ in humidified $H_2$ and $CH_4$ respectively. Globally, by comparing with the results previously shown in Figure 17 (B21), the second process ($R_2$-$C_2$) had a resistance of 5 cm$^2$ and a C of 794 $\mu$F/cm$^2$ ($f_{max}$ = 40 Hz) for the unpolarised cell (B24) versus 1.3 cm$^2$ and 100 $\mu$F/cm$^2$ ($f_{max}$ = 1224 Hz) for the polarised cell (B21), at 850°C and in humidified $H_2$,. This might indicate that the second process is related to the chemical impedance described by Adler et al. [48]. Primdahl et al., on the basis of $H_2$/$D_2$ isotopic effect studies, suggested that this process might be related to $H_2$ adsorption or to a chemical reaction step [27]. Also, hydrogen adsorption on NiO and its oxygen vacancies is reported to be of 96.4 kJ/mol, whereas hydrogen diffusion over YSZ is reported to be of 119.5 to 159.9 kJ/mol [52,53], These values are not far from the measured activation energies of both processes. However, the first process, ($R_1$-$C_1$), due to $R_1$'s lower sensitivity to the gas atmosphere and to equally low values of $C_1$ (10~20 $\mu$F/cm$^2$) in $CH_4$ and $H_2$ (Figure 37) and to its potential independent behaviour (Figure 17), at least before the cell's degradation in the case of B21, might be related to a chemical step or to charge transfer [54,55]. The summit frequency for the first process was of 5 kHz for the unpolarised and 10 kHz for the polarised one. In general, in both processes, the summit frequency tended to increase as the cell was polarised, showing an electrocatalyzed process.

In both processes, gas diffusion as well as gas conversion impedances could be ignored, as the summit frequencies of these kind of losses would range between 15 and 400 Hz. This was estimated for humidified $H_2$ and $CH_4$

on the basis of literature [37,56] by taking into account the testing configuration and the interdiffusion coefficient of $H_2O$ in $H_2$ and $H_2$ in $CH_4$. Similarly, estimates for $CO_2/CO$ fuels indicated negligible losses too.

The effect of the substituent on the polarisation of the cell cited above indicates furthermore that the catalytic effect has an important role in the electroactivity of these materials. In methane the activity follows the same trend as for the catalytic tests made in $CH_4$ rich atmospheres[31] (Figure 29). Ni incorporation had also a positive effect in wet $H_2$ (Figure 29). Thus total conductivity of the electrode material was an important factor in the performance but it was also tempered by the catalytic activity (ex. LCCo has a higher conductivity than Ni but a lower catalytic and electrocatalytic activity).

Also, as the OCVs of the LCs in wet $CH_4$ were governed by the $H_2/H_2O$ equilibrium over the electrode, it could be reasonable to suggest that $H_2$ oxidation was masking the overall $CH_4$ electrooxidation process, at least under low current densities. This $H_2$ stems from the local steam-reforming of $CH_4$, with a $CH_4$ conversion of no more than 0.3%, in accordance with previous catalytic runs. From the MS gas analysis of sealed LCaCMg and LSrCMg cells, $H_2$ concentration was observed to be low, being of about 0.5~1% (Figures 20 and 21). Even though there were both CO and $CO_2$ in the gas surrounding the anode with a ratio of $CO_2/CO$ 0.6, CO oxidation seemed not to affect the anode potential. As pointed out previously, the anode polarisation resistance under $CO-CO_2$ gas mixture was much higher than in $CH_4$ or $H_2$. The $R_p$s were of 1.7 in $H_2$, 6.1 in $CH_4$ and 9.2 to 17.2 $cm^2$ in $CO_2/CO$ of 0.14 and 1.44. Thus the kinetics of CO oxidation are about 1.5 to 2.8 time lower than for $CH_4$, and 5.4 to 10.2 time lower than for $H_2$. The low OCV values did not reflect the direct oxidation of $CH_4$, but rather $H_2$ and in much lower proportion CO oxidation. This might be the reason for this OCV effect. Norby et al. [24] have shown that the presence of water prevented carbon deposition over a $La_{0.7}Ca_{0.3}CrO_3$ anode which lead in the case of dry $CH_4$ to very high OCVs of 1500 mV. This might indicate, that the electrode impedance in humidified $CH_4$ might be related to hydrogen rather than CO or C as C direct oxidation was observed to be very slow over metallic and oxide electrodes [3,25,57].

The MS analysis of the anode gas composition under current load shows that all methane consumed corresponds to the faradaic current. From the analysis, CO seemed to increase with current, and $H_2$ to decrease, when compared to OCV (i.e. catalytic reaction). It is not very clear whether the mean reaction is partial oxidation, with a concomitant oxidation of $H_2$, or oxidation of $H_2$ with concomitant removal of carbon species by water. Steam reforming of $CH_4$ can be excluded in the case of LCaCMg, as its rate was of only $1.2 \times 10^{-10}$ $mol/m^2s$ at 850°C (whereas of $1.7 \times 10^{-9}$ and $1.1 \times 10^{-8}$ $mol/m^2s$ for LSrC and LCaCNi respectively) [32]., a low value compared to the rate of $CH_4$ consumption (about $4.4 \times 10^{-8}$ mol/s). On these bases, a possible scheme for the mechanism of the reaction is depicted in Figure 38. LSrCNi might be performing much better as its steam and $CO_2$ reforming activities were observed to be the highest among the series of LCs studied. As the overall polarisation losses tended to decrease as the catalytic activity increased, it is interesting to optimise the Ni content of the LSrCNi serie. In catalytic mode at least, in $CH_4$ combustion in 2:1:5 $CH_4:O_2:He$ gas mixture, Stojanovic et al. [22] found that the rate increased by a factor of about 100 from x = 0 to x = 1 in $LaCr_{1-x}Ni_xO_3$. An optimum for our purpose takes into account the unstability of the LSrCNi matrix [32].

Further, $H_2O$ did not seem to favour the electrocatalytic reaction in the case of LCaCMg and LSrCMg, at least at the low current densities, in accordance with previous catalytic measurements. In the contrary, $CO_2$ inhibited the reaction, and as in the case of the catalytic reactions, this is thought to be related to the formation of surface carbonates, as CO and $CO_2$ are thought to adsorb on the same catalytic sites [59].

Finally, Sr and Ni substitution turn out to be favourable for the catalytic as well as for the electrocatalytic activities. Sr addition is required to enhance the electronic conductivity of the electrode. Sr is better than Ca from the thermodynamic point of view and also for it allows a lower expansion of the $LaCrO_3$. Ni substitution, reduces further this expansion [34].

The cells were observed to be more stable when sintered at 1100°C. At higher sintering temperatures, some topotactic reactions were observed, linked with the formation of $(Sr)ZrO_3$ at the interface with YSZ. Further, the stability of the electrode was increased by intercalating a composite layer between the electrolyte and the electrode. The best performance was obtained with a 1 layered 78.2:21.8 $La_{0.85}Sr_{0.15}Cr_{0.9}Ni_{0.1}O_3$.+8YSZ + 3 layered $La_{0.85}Sr_{0.15}Cr_{0.9}Ni_{0.1}O_3$ composite anode, with a power output of 450 $mW/cm^2$ in $H_2$ and 300 $mW/cm^2$ in $CH_4$, at 875°C. The measured $R_p$ in $H_2$ was of 0.11 $\Omega cm^2$. The performance of the electrode was sustained for 136 h in methane.

**References**

(1) Minh, N. Q., J. Am. Ceram. Soc. 1993, 76, 563-588.
(2) Setoguchi, T.; Okamoto, K.; Eguchi, K.; Arai, H., J. Electrochem. Soc. 1992, 139, 2875-2880.
(3) Horita, T.; Sakai, N.; Kawada, T.; Yokokawa, H.; Dokiya, M., J. Electrochem. Soc. 1996, 142, 1161-1168.
(4) Marti, P. E., Swiss Federal Institute of Technology Zürich, 1994.
(5) Tejuca, L. G.; Fierro, J. L. G.; Tascon, J. M. D., Advances in Catalysis 1989, 36, 237-328.
(6) Chan, K. S.; Ma, J.; Jaenicke, S.; Chuah, G. K., Applied Catalysis A: General 1994, 107, 201-227.

(7) Doshi, R.; Alcock, C. B.; Gunasekaran, N.; Carberry, J. J., Journal of Catalysis 1993, 140, 557-563.

(8) Seiyama, T., Catal. Rev. -Sci. Eng. 1992, 34, 281-300.

(9) Nakamura, T.; Petzow, G.; Gauckler, L. J., Mat. Res. Bull. 1979, 14, 649-659.

(10) Sakai, N.; Kawada, T.; Yokokawa, H.; Dokiya, M.; Iwata, T., Journal of Material Science 1990, 25, 4531-4534.

(11) Sakai, N.; Kawada, T.; Yokokawa, H.; Dokiya, M., Solid State Ionics 1990, 40/41, 394-397.

(12) Sakai, N.; Kawada, T.; Yokokawa, H.; Dokiya, M. Science and Technology of Zirconia V, Melbourne, Australia, 1992.

(13) Sakai, N.; Kawada, T.; Yokokawa, H.; Dokiya, M., Journal of the Ceramic Society of Japan 1993, 101, 1195-1200.

(14) Sakai, N.; Kawada, T.; Yokokawa, H.; Dokiya, M.; Kojima, I, J. Am. Ceram. Soc. 1993, 76, 609-616.

(15) Sammes, N. M.; Ratnaraj, R., Journal of Materials Science Letters 1996, 15, 55-56.

(16) Sammes, N. M.; Ratnaraj, R., Journal of Materials Science 1997, 32, 687-692.

(17) Yokokawa, H.; Sakai, N.; Kawada, T.; Dokiya, M., J. Electrochem. Soc. 1991, 138, 1018-1027.

(18) Metcalfe, I. S.; Sundaresan, S., AIChE Journal 1988, 34, 195-208.

(19) Metcalfe, I. S.; Middleton, P. H.; Petrolekas, P.; Steele, B. C. H., Solid State Ionics 1992, 57, 259-264.

(20) Middleton, P. H.; Steiner, H. J.; Christie, G. M.; Baker, R.; Metcalfe, I. S.; Steele, B. C. H. Proceedings of the Third International Symposium on Solid Oxide Fuel Cells, Hawaii, 1993; p 542-551.

(21) Mims, C. A.; Stojanovic, M.; Joos, N.; Moudallal, H.; Jacobson, A. J. Solid Oxide Fuel Cells V, Aachen, 1997; p 737-745.

(22) Stojanovic, M.; Mims, C. A.; Moudallal, H.; Yang, Y. L.; Jacobson, A. J., Journal of Catalysis 1997, 166, 324-332.

(23) Saracco, G.; Scibilia, G.; A, I.; Baldi, G., Applied Catalysis B: Environmental 1996, 8, 229-244.

(24) Norby, T.; Osborg, P. A.; Dyrlie, O.; Hildrum, R; Seiersten, M.; Glenne, R. European Solid Oxide Fuel Cell Forum I, Lucerne, Switzerland, 1994; p 217-226.

(25) Horita, T.; Sakai, N.; Kawada, T.; Yokokawa, H.; Dokiya, M. First European Solid Oxide Fuel Cell Forum, Lucerne, Switzerland, 1994; p 227-236.

(26) Gobal, F., Indian Journal of Chemistry 1996, 35A, 687-689.

(27) Primdahl, S.; Hansen, J. R.; Grahl-Madsen, L.; Larsen, P. H., J. Electrochem. Soc. 2001, 148, A74-A81.

(28) Metcalfe, I. S.; Baker, R. T., Catalysis Today 1996, 27, 285-288.

(29) Sfeir, J.; herle, J. V.; McEvoy, A. J. Third European Solid Oxide Fuel Cell Forum, Nantes-France, 1998; p 267-276.

(30) Sfeir, J.; herle, J. V.; McEvoy, A. J., Journal of the European Ceramic Society 1999, 19, 897-902.

(31) Sfeir, J.; Buffat, P. A.; Möckli, P.; Xanthopoulos, N.; Vasquez, R.; Mathieu, H. J.; herle, J. V.; Thampi, K. R., in preparation.

(32) Sfeir, J. Solid Oxide Fuel Cell Materials and Mechanisms, Les Diablerets, Switzerland, in preparation.

(33) herle, J. V., Swiss Federal Institute of Technology Lausanne (EPFL), 1993.

(34) Armstrong, T. R.; Stevenson, J. W.; Pederson, L. R.; Raney, P. E., J. Electrochem. Soc. 1996, 143, 2919-2925.

(35) Widmer, S. L., Swiss Federal Institute of Technology, Lausanne, 1997.

(36) Impedance Spectroscopy. Emphasizing Solid Materials and Systems; John Wiley & Sons, 1987.

(37) Primdahl, S.; Mogensen, M., J. Electrochem. Soc. 1998, 145, 2431-2438.

(38) Hibino, T.; Kuwahara, Y.; Wang, S.; Kakimoto, S.; Sano, M., Electrochemical and Solid-State Letters 1998, 1, 197-199.

(39) Mukundan, R.; Brosha, E. L.; Brown, D. R.; Garzon, F. H., Electrochemical and Solid-State Letters 1999, 2.

(40) Lacombe, S.; Zanthoff, H.; Mirodatos, C., Journal of Catalysis 1995, 155, 106-116.

(41) Yokokawa, H.; Horita, T.; Sakai, N.; Kawada, T.; Dokiya, M.; Takai, Y.; Todoki, M., Thermochimica Acta 1995, 267, 129-138.

(42) Simner, S. P.; Hardy, J. S.; Stevenson, J. W.; Armstrong, T. R., Solid State Ionics 2000, 128, 53-63.

(43) Glenne, R.; Horst, J. A.; Jørgensen, S.; Norby, T.; Seiersten, M., Surface and Interface Analysis 1994, 22, 275-279.

(44) Corbin, S. F.; Apté, P. S., J. Am. Ceram. Soc. 1999, 82, 1693-1701.

(45) Kleinlogel, C. M., ETHZ, 1999.

(46) Yasuda, I.; Hishinuma, M., Solid State Ionics 1995, 80, 141-150.

(47) Yasuda, I.; Hishinuma, M., J. Electrochem. Soc. 1996, 143, 1583-1590.

(48) Adler, S. B.; Lane, J. A.; Steele, B. C. H., J. Electrochem. Soc. 1996, 143, 3554-3564.

(49) Adler, S. B., Solid State Ionics 1998, 111, 125-134.

(50) Kawada, T.; Horita, T.; Sakai, N.; Yokokawa, H.; Dokiya, M., Solid State Ionics 1995, 79, 201-207.

(51) Mizusaki, J.; Yamauchi, S.; Fueki, K.; Ishikawa, A., Solid State Ionics 1984, 12, 119-124.

(52) Holtappels, P.; Haart, L. G. J. d.; Stimming, U., J. Electrochem. Soc. 1999, 146, 1620-1625.

(53) Holtappels, P.; Vinke, I. C.; Haart, L. G. J. d.; Stimming, U., J. Electrochem. Soc. 1999, 146, 2976-2982.

(54) Robertson, N. L.; Michaels, J. N., J. Electrochem. Soc. 1991, 138, 1494-1499.

(55) Bockris, J. O. M.; Reddy, A. K. N. Modern Electrochemistry, 3 ed.; Plenum/Rosetta, 1977.

(56) Primdahl, S.; Mogensen, M., J. Electrochem. Soc. 1999, 146, 2827-2833.

(57) Horita, T.; Sakai, N.; Kawada, T.; Yokokawa, H.; Dokiya, M., J. Electrochem. Soc. 1995, 142, 2621-2624.

(58) Lee, J. H.; Trimm, D. L., Fuel Processing Technology 1995, 42, 339-359.

(59) Tilset, B. G.; Fjellvåg, H.; Kjekshus, A.; Slagtern, Å.; Dahl, I., Applied Catalysis A: General 1996, 147, 189-205.

(60) Mori, M.; Sakai, N.; kawada, T.; Yokokawa, H.; Dokiya, M., Denki Kagaku 1991, 59, 314-319.

(61) Yasuda, I.; Hikita, T., J. Electrochem. Soc. 1993, 140, 1699-1704.

(62) Nasrallah, M. M.; Carter, J. D.; Anderson, H. U.; Koc, R. The Second International Symposium on Solid Oxide Fuel Cells, Athens, Greece, 1991; p 637-644.

(63) Meadowcroft, D. B., Brit. J. Appl. Phys. (J. Phys. D) 1969, 2, 1225-1233.

(64) Höfer, H. E.; Schmidberger, R., J. Electrochem. Soc. 1994, 141, 782-786.

(65) Kim, J.-W.; Virkar, A. V.; Fung, K.-Z.; Mehta, K.; Singhal, S. C., J. Electrochem. Soc. 1999,146,69-78.

(66) Bay, L.;Horita, T.; Sakai, N.; Ishikawa, M.; Yamaji, K.; Yokokawa, H., Solid State Ionics 1998, 113-115, 363-367.

(67) Netzer, F.P.; Bertel, E., Handbook on the Physics and Chemistry of Rare Earth, 1982.

(68) Takasu, Y.; Nishibe, S.; Matsuda, Y., Journal of Catalysis 1977, 49, 236-239.

## Claims

1. Use of a twice substituted lanthanide chromite of the perovskite $ABO_3$ type, as an anode material of a direct hydrocarbon fed, in particular methane fed SOFC, wherein the lanthanide of said lanthanide chromite is La (lanthanum) or Pr (praseodymium), and wherein said lanthanide chromite is substituted by Sr on A sites and by an element selected from the group consisting of Ni and Mg on B sites.

2. Use of a twice substituted lanthanide chromite of the perovskite $ABO_3$ type, as an anode electrocatalyst of an oxidation reaction of a gaseous hydrocarbon, in particular methane, wherein the lanthanide of said lanthanide chromite is La (lanthanum) or Pr (praseodymium), and wherein said lanthanide chromite is substituted by Sr on A sites and by an element selected from the group consisting of Ni and Mg on B sites.

3. Use of a twice substituted lanthanide chromite of the perovskite $ABO_3$ type, as a catalyst of a steam reforming reaction of a gaseous hydrocarbon, in particular methane, with $H_2O$ in vapour phase, wherein the lanthanide of said lanthanide chromite is La (lanthanum) or Pr (praseodymium), and wherein said lanthanide chromite is substituted by Sr on A sites and by an element selected from the group consisting of Ni and Mg on B sites.

4. Use of a twice substituted lanthanide chromite of the perovskite $ABO_3$ type, as a catalyst of a $CO_2$ reforming reaction of a gaseous hydrocarbon, in particular methane, wherein the lanthanide of said lanthanide chromite is La (lanthanum) or Pr (praseodymium), and wherein said lanthanide chromite is substituted by Sr on A sites and by an element selected from the group consisting of Ni and Mg on B sites.

5. Use, as claimed in anyone of claims 1 to 4, of a Sr and Ni substituted lanthanum chromite of formula $La_{1-x}Sr_xCr_{1-y}Ni_yO_3$ with the proviso that:

   $0.01 < x < 0.3$ and
   $0.01 < y < 0.5$

   in particular with the proviso that:

   $0.1 < x < 0.2$ and
   $0.05 < y < 0.2$.

6. Use of $La_{0.85}Sr_{0.15}Cr_{0.9}Ni_{0.1}O_3$ for making an anode of a SOFC.

7. Use as claimed in anyone of claims 1 to 4, wherein said lanthanide is Praseodymium.

8. A SOFC, with a solid electrolyte layer and at least one anode layer constituting a stratified structure, **characterised in that** said anode layer incorporates the twice substituted lanthanide chromite of claim 1, and **in that** said stratified structure comprises a composite layer comprising a major amount of said substituted lanthanide chromite and a minor amount of the material of said electrolyte layer.

9. The SOFC of claim 8, wherein said substituted lanthanide chromite is a lanthanum chromite according to claim 5, in particular is $La_{0.85}Sr_{0.15}Cr_{0.9}Ni_{0.1}O_3$, and in particular that said electrolyte is YSZ or ceria.

10. The SOFC of claims 8 or 9, wherein said stratified structure comprises one composite layer located at the interface of said anode with said electrolyte and a plurality of layers consisting of said lanthanide chromite.

11. The SOFC of anyone of claims 8-10, wherein said minor amount of SOFC electrolyte is between 15 % and 40 % in weight, in particular about 20 % in weight.

12. The SOFC of anyone of claims 8-11, wherein said anode layer is obtained by providing said substituted lanthanide chromite as a perovskite powder, depositing at least one layer comprising said perovskite powder on a SOFC electrolyte member, thereby forming a stratified structure, and sintering said stratified structure at a temperature of between 1000°C and 1300°C, in particular 1050°C and 1200°C, more particularly at about 1100°C.

**Patentansprüche**

1. Verwendung eines zweifach substituierten Lanthanidchromits vom Perowskit-$ABO_3$-Typ als Anodenmaterial einer direkt mit Kohlenwasserstoff gespeisten, insbesondere mit Methan gespeisten SOFC, wobei es sich bei dem Lanthanid des Lanthanidchromits um La (Lanthan) oder Pr (Praseodym) handelt und wobei das Lanthanidchromit an A-Stellen durch Sr substituiert ist und an B-Stellen durch ein Element aus der Gruppe bestehend aus Ni und Mg substituiert ist.

2. Verwendung eines zweifach substituierten Lanthanidchromits vom Perowskit-$ABO_3$-Typ als Anoden-Elektrokatalysator einer Oxidationsreaktion eines gasförmigen Kohlenwasserstoffs, insbesondere von Methan, wobei es sich bei dem Lanthanid des Lanthanidchromits um La (Lanthan) oder Pr (Praseodym) handelt und wobei das Lanthanidchromit an A-Stellen durch Sr substituiert ist und an B-Stellen durch ein Element aus der Gruppe bestehend aus Ni und Mg substituiert ist.

3. Verwendung eines zweifach substituierten Lanthanidchromits vom Perowskit-$ABO_3$-Typ als Katalysator für eine Dampfreformierungsreaktion eines gasförmigen Kohlenwasserstoffs, insbesondere von Methan, mit $H_2O$ in der Dampfphase, wobei es sich bei dem Lanthanid des Lanthanidchromits um La (Lanthan) oder Pr (Praseodym) handelt und wobei das Lanthanidchromit an A-Stellen durch Sr substituiert ist und an B-Stellen durch ein Element aus der Gruppe bestehend aus Ni und Mg substituiert ist.

4. Verwendung eines zweifach substituierten Lanthanidchromits vom Perowskit-$ABO_3$-Typ als Katalysator für eine $CO_2$-Reformierungsreaktion eines gasförmigen Kohlenwasserstoffs, insbesondere von Methan, wobei es sich bei dem Lanthanid des Lanthanidchromits um La (Lanthan) oder Pr (Praseodym) handelt und wobei das Lanthanidchromit an A-Stellen durch Sr substituiert ist und an B-Stellen durch ein Element aus der Gruppe bestehend aus Ni und Mg substituiert ist.

5. Verwendung nach einem der Ansprüche 1 bis 4, eines Sr- und Nisubstituierten Lanthanchromits der Formel $La_{1-x}Sr_xCr_{1-y}Ni_yO_3$, mit der Maßgabe, dass:

   $0,01 < x < 0,3$ und
   $0,01 < y < 0,5$,

   insbesondere mit der Maßgabe, dass:

   $0,01 < x < 0,2$ und
   $0,05 < y < 0,2$.

6. Verwendung von $La_{0,85}Sr_{0,15}Cr_{0,9}Ni_{0,1}O_3$ zur Herstellung einer Anode einer SOFC.

7. Verwendung nach einem der Ansprüche 1 bis 4, wobei es sich bei dem Lanthanid um Praseodym handelt.

8. SOFC, mit einer Festelektrolytschicht und mindestens einer Anodenschicht mit Schichtstruktur, **dadurch gekennzeichnet, dass** die Anodenschicht das zweifach substituierte Lanthanidchromit nach Anspruch 1 enthält und dass die Schichtstruktur eine Verbundschicht umfasst, die eine übergeordnete Menge des substituierten Lanthanidchromits und eine untergeordnete Menge des Materials der Elektrolytschicht umfasst.

9. SOFC nach Anspruch 8, wobei es sich bei dem substituierten Lanthanidchromit um ein Lanthanchromit nach Anspruch 5, insbesondere $La_{0,85}Sr_{0,15}Cr_{0,9}Ni_{0,1}O_3$, handelt und es sich insbesondere bei dem Elektrolyten um YSZ oder Ceroxid handelt.

10. SOFC nach Anspruch 8 oder 9, wobei die Schichtstruktur eine Verbundschicht, die sich an der Grenzfläche der Anode mit dem Elektrolyten befindet, und mehrere Schichten aus dem Lanthanidchromit umfasst.

11. SOFC nach einem der Ansprüche 8-10, wobei die untergeordnete Menge von SOFC-Elektrolyt zwischen 15 und 40 Gew.-% und insbesondere etwa 20 Gew.-% beträgt.

12. SOFC nach einem der Ansprüche 8-11, wobei die Anodenschicht durch Bereitstellen des substituierten Lanthanidchromits als Perowskit-Pulver, Abscheiden mindestens einer Schicht, die das Perowskit-Pulver umfasst, auf einem SOFC-Elektrolyt-Element, wodurch eine Schichtstruktur gebildet wird, und Sintern der Schichtstruktur bei einer Temperatur zwischen 1000°C und 1300°C, insbesondere 1050°C und 1200°C, spezieller bei etwa 1100°C, erhalten wird.

**Revendications**

1. Utilisation d'un chromite de lanthanide substitué deux fois du type pérovskite $ABO_3$ comme matériau anodique d'une SOFC directe alimentée par hydrocarbure, en particulier alimentée par méthane, dans laquelle le lanthanide dudit chromite de lanthanide est La (lanthane) ou Pr (praséodyme), et dans laquelle ledit chromite de lanthanide est substitué par Sr sur des sites A et par un élément choisi dans le groupe constitué par Ni et Mg sur des sites B.

2. Utilisation d'un chromite de lanthanide substitué deux fois du type pérovskite $ABO_3$ comme électrocatalyseur anodique d'une réaction d'oxydation d'un hydrocarbure gazeux, en particulier de méthane, dans laquelle le lanthanide dudit chromite de lanthanide est La (lanthane) ou Pr (praséodyme), et dans laquelle ledit chromite de lanthanide est substitué par Sr sur des sites A et par un élément choisi dans le groupe constitué par Ni et Mg sur des sites B.

3. Utilisation d'un chromite de lanthanide substitué deux fois du type pérovskite $ABO_3$ comme catalyseur d'une réaction de reformage à la vapeur d'un hydrocarbure gazeux, en particulier de méthane, avec $H_2O$ en phase vapeur, dans laquelle le lanthanide dudit chromite de lanthanide est La (lanthane) ou Pr (praséodyme), et dans laquelle ledit chromite de lanthanide est substitué par Sr sur des sites A et par un élément choisi dans le groupe constitué par Ni et Mg sur des sites B.

4. Utilisation d'un chromite de lanthanide substitué deux fois du type pérovskite $ABO_3$ comme catalyseur d'une réaction de reformage au $CO_2$ d'un hydrocarbure gazeux, en particulier de méthane, dans laquelle le lanthanide dudit chromite de lanthanide est La (lanthane) ou Pr (praséodyme), et dans laquelle ledit chromite de lanthanide est substitué par Sr sur des sites A et par un élément choisi dans le groupe constitué par Ni et Mg sur des sites B.

5. Utilisation selon l'une quelconque des revendications 1 à 4 d'un chromite de lanthane substitué par Sr et Ni de formule $La_{1-x}Sr_xCr_{1-y}Ni_yO_3$ à condition que :

$0,01 < x < 0,3$ et
$0,01 < y < 0,5,$

en particulier à condition que :

$0,1 < x < 0,2$ et
$0,05 < y < 0,2.$

6. Utilisation de $La_{0,85}Sr_{0,15}Cr_{0,9}Ni_{0,1}O_3$ pour la fabrication d'une anode d'une SOFC.

7. Utilisation selon l'une quelconque des revendications 1 à 4, dans laquelle ledit lanthanide est le praséodyme.

8. SOFC, avec une couche d'électrolyte solide et au moins une couche anodique constituant une structure stratifiée, **caractérisée en ce que** ladite couche anodique incorpore le chromite de lanthanide substitué deux fois de la revendication 1, et **en ce que** ladite structure stratifiée comprend une couche composite comprenant une quantité majeure dudit chromite de lanthanide substitué et une quantité mineure du matériau de ladite couche d'électrolyte.

9. SOFC selon la revendication 8, dans laquelle ledit chromite de lanthanide substitué est un chromite de lanthane selon la revendication 5, en particulier est $La_{0,85}Sr_{0,15}Cr_{0,9}Ni_{0,1}O_3$, et en particulier en ce que ledit électrolyte est l'YSZ ou l'oxyde de cérium.

10. SOFC selon la revendication 8 ou 9, dans laquelle ladite structure stratifiée comprend une couche composite située à l'interface de ladite anode avec ledit électrolyte et une pluralité de couches composées dudit chromite de lanthanide.

11. SOFC selon l'une quelconque des revendications 8 à 10, dans laquelle ladite quantité mineure d'électrolyte de SOFC est entre 15 % et 40 % en poids, en particulier environ 20 % en poids.

12. SOFC selon l'une quelconque des revendications 8 à 11, dans laquelle ladite couche anodique est obtenue en fournissant ledit chromite de lanthanide substitué sous la forme d'une poudre de pérovskite, en déposant au moins une couche comprenant ladite poudre de pérovskite sur un élément électrolytique de SOFC, en formant ainsi une structure stratifiée, et en frittant ladite structure stratifiée à une température comprise entre 1000 °C et 1300 °C, en particulier 1050 °C et 1200 °C, plus particulièrement à environ 1100 °C.

**Fig. 1**

**Fig. 2**

**Fig. 3**

*Fig. 4*

*Fig. 5a*

EP 1 405 361 B1

*Fig. 5b*

*Fig. 5c*

Fig. 6a

Fig. 6b

*Fig. 7a*

*Fig. 7b*

**Fig. 7c**

**Fig. 7d**

*Fig. 8a*

*Fig. 8b*

**Fig. 9a**

**Fig. 9b**

**Fig. 9c**

Fig. 10a

Fig. 10b

Fig. 10c

| Acc.V | Spot | Magn | Det | WD | Exp | | 2 μm |
|-------|------|------|-----|-----|-----|----------|------|
| 20.0 kV | 3.0 | 14000x | SE | 9.2 | 3 | LSCNi, e2c | |

*Fig. 11a*

Mag :14001x                    1.0um

*Fig. 11b*

Fig. 12

Fig. 13

**Fig. 14**

**Fig. 15**

**Fig. 16**

**Fig. 17a**

*Fig. 17b*

*Fig. 17c*

**Fig. 17d**

**Fig. 17e**

*Fig. 17f*

**Fig. 18**

**Fig. 19a**

**Fig. 19b**

**Fig. 20a**

**Fig. 20b**

**Fig. 21**

**Fig. 22**

**Fig. 23**

**Fig. 24a**

**Fig. 24b**

**Fig. 25**

| Acc.V | Spot | Magn | Det | WD | Exp | | 5 μm |
|-------|------|------|-----|-----|-----|------------|------|
| 20.0 kV | 2.0 | 7000x | SE | 10.6 | 2 | LC, e5f | |

*Fig. 26a*

| Acc.V | Spot | Magn | Det | WD | Exp | | 5 μm |
|-------|------|------|-----|-----|-----|------------|------|
| 20.0 kV | 2.0 | 7000x | SE | 9.7 | 2 | LSC, e5a | |

*Fig. 26b*

| Acc.V | Spot | Magn | Det | WD | Exp | | 5 μm |
| 20.0 kV | 2.0 | 7000x | SE | 10.6 | 2 | LCCo, e5i | |

*Fig. 26c*

| Acc.V | Spot | Magn | Det | WD | Exp | | 5 μm |
| 20.0 kV | 2.0 | 7000x | SE | 10.1 | 2 | LCNi, e5e | |

*Fig. 26d*

*Fig. 27a*

*Fig. 27b*

*Fig. 27c*

*Fig. 27d*

**Fig. 28**

**Fig. 29a**

*Fig. 29b*

*Fig. 29c*

*Fig. 29d*

*Fig. 30a*

**Fig. 30b**

**Fig. 31**

*Fig. 32a*

*Fig. 32b*

*Fig. 33a*

(a:0.053±0.384, b:-6631.5±430, r:0.996)

*Fig. 33b*

*Fig. 34*

*Fig. 35a*

*Fig. 35b*

**Fig. 36**

**Fig. 37a**

**Fig. 37b**

**Fig. 37c**

**Fig. 37d**

**Fig. 38**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4562124 A

**Non-patent literature cited in the description**

- **MINH, N. Q.** *J. Am. Ceram. Soc.,* 1993, vol. 76, 563-588
- **SETOGUCHI, T. ; ; OKAMOTO, K. ; EGUCHI, K. ; ARAI, H.** *J. Electrochem. Soc.,* 1992, vol. 139, 2875-2880
- **HORITA, T. ; SAKAI, N. ; KAWADA, T. ; YOKOKAWA, H.; ; DOKIYA, M.** *J. Electrochem. Soc.,* 1996, vol. 142, 1161-1168
- **MARTI, P. E.** *Swiss Federal Institute of Technology Zürich,* 1994
- **TEJUCA, L. G. ; FIERRO, J. L. G. ; TASCON, J. M. D.** *Advances in Catalysis,* 1989, vol. 36, 237-328
- **CHAN, K. S. ; MA, J. ; JAENICKE, S. ; CHUAH, G. K.** *Applied Catalysis A: General,* 1994, vol. 107, 201-227
- **DOSHI, R. ; ALCOCK, C. B. ; ; GUNASEKARAN, N. ; CARBERRY, J. J.** *Journal of Catalysis,* 1993, vol. 140, 557-563
- **SEIYAMA, T.** *Catal. Rev. -Sci. Eng.,* 1992, vol. 34, 281-300
- **NAKAMURA, T. ; PETZOW, G. ; GAUCKLER, L. J.** *Mat. Res. Bull.,* 1979, vol. 14, 649-659
- **SAKAI, N. ; KAWADA, T. ; YOKOKAWA, H. ; DOKIYA, M. ; IWATA, T.** *Journal of Material Science,* 1990, vol. 25, 4531-4534
- **SAKAI, N. ; KAWADA, T. ; YOKOKAWA, H. ; DOKIYA, M.** *Solid State Ionics,* 1990, vol. 40/41, 394-397
- **SAKAI, N. ; KAWADA, T. ; YOKOKAWA, H. ; DOKIYA, M.** *Science and Technology of Zirconia V,* 1992
- **SAKAI, N. ; KAWADA, T. ; YOKOKAWA, H. ; DOKIYA, M.** *Journal of the Ceramic Society of Japan,* 1993, vol. 101, 1195-1200
- **SAKAI, N. ; KAWADA, T. ; YOKOKAWA, H.; ; DOKIYA, M. ; KOJIMA, I.** *J. Am. Ceram. Soc.,* 1993, vol. 76, 609-616
- **SAMMES, N. M. ; RATNARAJ, R.** *Journal of Materials Science Letters,* 1996, vol. 15, 55-56
- **SAMMES, N. M. ; RATNARAJ, R.** *Journal of Materials Science,* 1997, vol. 32, 687-692

- **YOKOKAWA, H. ; SAKAI, N. ; KAWADA, T. ; DOKIYA, M.** *J. Electrochem. Soc.,* 1991, vol. 138, 1018-1027
- **METCALFE, I. S. ; SUNDARESAN, S.** *AIChE Journal,* 1988, vol. 34, 195-208
- **METCALFE, I. S. ; MIDDLETON, P. H. ; PETROLEKAS, P. ; STEELE, B. C. H.** *Solid State Ionics,* 1992, vol. 57, 259-264
- **MIDDLETON, P. H. ; STEINER, H. J. ; CHRISTIE, G. M. ; BAKER, R. ; METCALFE, I. S. ; STEELE, B. C. H.** *Proceedings of the Third International Symposium on Solid Oxide Fuel Cells,* 1993, 542-551
- **MIMS, C. A. ; STOJANOVIC, M. ; JOOS, N. ; MOUDALLAL, H. ; JACOBSON, A. J.** *Solid Oxide Fuel Cells V,* 1997, 737-745
- **STOJANOVIC, M. ; MIMS, C. A. ; MOUDALLAL, H. ; YANG, Y. L. ; JACOBSON, A. J.** *Journal of Catalysis,* 1997, vol. 166, 324-332
- **SARACCO, G. ; SCIBILIA, G. ; A, I. ; BALDI, G.** *Applied Catalysis B: Environmental,* 1996, vol. 8, 229-244
- **NORBY, T. ; OSBORG, P. A. ; DYRLIE, O. ; HILDRUM, R ; SEIERSTEN, M. ; GLENNE, R.** *European Solid Oxide Fuel Cell Forum I,* 1994, 217-226
- **HORITA, T. ; SAKAI, N. ; KAWADA, T. ; YOKOKAWA, H. ; DOKIYA, M.** *First European Solid Oxide Fuel Cell Forum,* 1994, 227-236
- **GOBAL, F.** *Indian Journal of Chemistry,* 1996, vol. 35A, 687-689
- **PRIMDAHL, S. ; HANSEN, J. R. ; GRAHL-MADSEN, L. ; LARSEN, P. H.** *J. Electrochem. Soc.,* 2001, vol. 148, A74-A81
- **METCALFE, I. S. ; BAKER, R. T.** *Catalysis Today,* 1996, vol. 27, 285-288
- **SFEIR, J. ; HERLE, J. V. ; MCEVOY, A. J.** *Third European Solid Oxide Fuel Cell Forum,* 1998, 267-276
- **SFEIR, J. ; HERLE, J. V. ; MCEVOY, A. J.** *Journal of the European Ceramic Society,* 1999, vol. 19, 897-902
- **SFEIR, J.** Solid Oxide Fuel Cell Materials and Mechanisms. *Les Diablerets*
- **HERLE, J. V.** *Swiss Federal Institute of Technology Lausanne (EPFL),* 1993

- **ARMSTRONG, T. R. ; STEVENSON, J. W. ; PEDERSON, L. R. ; RANEY, P. E.** *J. Electrochem. Soc.,* 1996, vol. 143, 2919-2925
- **WIDMER, S. L.** *Swiss Federal Institute of Technology,* 1997
- Impedance Spectroscopy. Emphasizing Solid Materials and Systems. John Wiley & Sons, 1987
- **PRIMDAHL, S. ; MOGENSEN, M.** *J. Electrochem. Soc.,* 1998, vol. 145, 2431-2438
- **HIBINO, T. ; KUWAHARA, Y. ; WANG, S. ; KAKIMOTO, S. ; SANO, M.** *Electrochemical and Solid-State Letters,* 1998, vol. 1, 197-199
- **MUKUNDAN, R. ; BROSHA, E. L. ; BROWN, D. R. ; GARZON, F. H.** *Electrochemical and Solid-State Letters,* 1999, 2
- **LACOMBE, S. ; ZANTHOFF, H. ; MIRODATOS, C.** *Journal of Catalysis,* 1995, vol. 155, 106-116
- **YOKOKAWA, H. ; HORITA, T. ; SAKAI, N. ; KAWADA, T. ; DOKIYA, M. ; TAKAI, Y. ; TODOKI, M.** *Thermochimica Acta,* 1995, vol. 267, 129-138
- **SIMNER, S. P. ; HARDY, J. S. ; STEVENSON, J. W. ; ARMSTRONG, T. R.** *Solid State Ionics,* 2000, vol. 128, 53-63
- **GLENNE, R. ; HORST, J. A. ; JØRGENSEN, S. ; NORBY, T. ; SEIERSTEN, M.** *Surface and Interface Analysis,* 1994, vol. 22, 275-279
- **CORBIN, S. F. ; APTÉ, P. S.** *J. Am. Ceram. Soc.,* 1999, vol. 82, 1693-1701
- **KLEINLOGEL, C. M.** *ETHZ,* 1999
- **YASUDA, I. ; HISHINUMA, M.** *Solid State Ionics,* 1995, vol. 80, 141-150
- **YASUDA, I. ; HISHINUMA, M.** *J. Electrochem. Soc.,* 1996, vol. 143, 1583-1590
- **ADLER, S. B. ; LANE, J. A. ; STEELE, B. C. H.** *J. Electrochem. Soc.,* 1996, vol. 143, 3554-3564
- **ADLER, S. B.** *Solid State Ionics,* 1998, vol. 111, 125-134
- **KAWADA, T. ; HORITA, T. ; SAKAI, N. ; YOKOKAWA, H. ; DOKIYA, M.** *Solid State Ionics,* 1995, vol. 79, 201-207
- **MIZUSAKI, J. ; YAMAUCHI, S. ; FUEKI, K. ; ISHIKAWA, A.** *Solid State Ionics,* 1984, vol. 12, 119-124
- **HOLTAPPELS, P. ; HAART, L. G. J. D. ; STIMMING, U.** *J. Electrochem. Soc.,* 1999, vol. 146, 1620-1625
- **HOLTAPPELS, P. ; VINKE, I. C. ; HAART, L. G. J. D. ; STIMMING, U.** *J. Electrochem. Soc.,* 1999, vol. 146, 2976-2982
- **ROBERTSON, N. L. ; MICHAELS, J. N.** *J. Electrochem. Soc.,* 1991, vol. 138, 1494-1499
- **BOCKRIS, J. O. M. ; REDDY, A. K. N.** Modern Electrochemistry. Plenum/Rosetta, 1977
- **PRIMDAHL, S. ; MOGENSEN, M.** *J. Electrochem. Soc.,* 1999, vol. 146, 2827-2833
- **HORITA, T. ; SAKAI, N. ; KAWADA, T. ; YOKOKAWA, H. ; DOKIYA, M.** *J. Electrochem. Soc.,* 1995, vol. 142, 2621-2624
- **LEE, J. H. ; TRIMM, D. L.** *Fuel Processing Technology,* 1995, vol. 42, 339-359
- **TILSET, B. G. ; FJELLVÅG, H. ; KJEKSHUS, A. ; SLAGTERN, Å. ; DAHL, I.** *Applied Catalysis A: General,* 1996, vol. 147, 189-205
- **MORI, M. ; SAKAI, N. ; KAWADA, T. ; YOKOKAWA, H. ; DOKIYA, M.** *Denki Kagaku,* 1991, vol. 59, 314-319
- **YASUDA, I. ; HIKITA, T.** *J. Electrochem. Soc.,* 1993, vol. 140, 1699-1704
- **NASRALLAH, M. M. ; CARTER, J. D. ; ANDERSON, H. U. ; KOC, R.** *The Second International Symposium on Solid Oxide Fuel Cells,* 1991, 637-644
- **MEADOWCROFT, D. B.** *Brit. J. Appl. Phys. (J. Phys. D),* 1969, vol. 2, 1225-1233
- **HÖFER, H. E. ; SCHMIDBERGER, R.** *J. Electrochem. Soc.,* 1994, vol. 141, 782-786
- **KIM, J.-W. ; VIRKAR, A. V. ; FUNG, K.-Z. ; MEHTA, K. ; SINGHAL, S. C.** *J. Electrochem. Soc.,* 1999, vol. 146, 69-78
- **BAY, L. ; HORITA, T. ; SAKAI, N. ; ISHIKAWA, M. ; YAMAJI, K. ; YOKOKAWA, H.** *Solid State Ionics,* 1998, vol. 113-115, 363-367
- **NETZER, F.P. ; BERTEL, E.** Handbook on the Physics and Chemistry of Rare Earth. 1982
- **TAKASU, Y. ; NISHIBE, S. ; MATSUDA, Y.** *Journal of Catalysis,* 1977, vol. 49, 236-239